# EUROPEAN PATENT SPECIFICATION

(11) **EP 4 538 819 B1**
(45) Date of publication and mention of the grant of the patent: **11.11.2026**
(21) Application number: 23830936.3
(22) Date of filing: 29.05.2023
(51) Int. Cl.: G05D 1/242, G05D 1/243, G05D 1/622, G05D 1/672, G05D 101/20, A01B 69/00, A01B 69/04, A01D 75/18, G05D 105/15, G05D 107/20, G05D 109/10, G05D 111/10

(54) **WORK VEHICLE, CONTROL METHOD, AND CONTROL SYSTEM**
NUTZFAHRZEUG, STEUERUNGSVERFAHREN UND STEUERUNGSSYSTEM
VÉHICULE DE TRAVAIL, PROCÉDÉ DE COMMANDE ET SYSTÈME DE COMMANDE

(30) Priority: 29.06.2022 JP 2022104117
(43) Date of publication of application: 16.04.2025
(73) Proprietor: Kubota Corporation, Osaka-shi, Osaka 530-0011 (JP)
(72) Inventor: MURATA, Yusuke, Sakai-shi, Osaka 590-0908 (JP)
(74) Representative: Cabinet Beau de Loménie
(86) International application number: PCT/JP2023/019973
(87) International publication number: WO 2024/004486

(56) References cited:
- CN-A- 112 492 956
- JP-A- 2017 228 155
- JP-A- 2019 101 931
- US-A1- 2019 163 190
- US-A1- 2020 029 490
- US-A1- 2021 357 664

## Description

### TECHNICAL FIELD

The present disclosure relates to a work vehicle performing self-driving, a control method for a work vehicle performing self-driving, and a control system for a work vehicle performing self-driving.

### BACKGROUND ART

Research and development has been directed to the automation of agricultural machines. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the fields. Patent Document 1 discloses a system to cause an unmanned work vehicle to automatically travel between two fields separated from each other with a road being sandwiched therebetween. Patent Document 2 discloses a work vehicle controlled regarding self-driving based on the state of a road where the work vehicle travels and the state of an implement linked to the work vehicle. Patent document 3 discloses vehicle controllers for agricultural and industrial applications. Patent document 4 discloses techniques for autonomous obstacle monitoring.

### CITATION LIST

### PATENT LITERATURE

[Patent Document 1] Japanese Laid-Open Patent Publication No. 2021-029218
[Patent Document 2] International Publication No. WO2022-038860
[Patent Document 3] US Patent Application No. US 2020/029490 A
[Patent Document 4] US Patent Application No. US 2021/357664 A1

### SUMMARY OF INVENTION

### TECHNICAL PROBLEM

It is required to control a work vehicle (including an agricultural machine) to travel by self-driving efficiently.

The present disclosure provides a work vehicle capable of traveling by self-driving efficiently, a method for controlling a work vehicle performing self-driving to travel efficiently, and a control system capable of controlling a work vehicle to travel by self-driving efficiently.

### SOLUTION TO PROBLEM

A work vehicle according to an embodiment of the present invention is defined in claim 1.

A control method according to an embodiment of the present invention is as defined in claim 9.

A control system according to an embodiment of the present invention is as defined in claim 10.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

An embodiment of the present disclosure provides a work vehicle capable of traveling by self-driving efficiently, a method for controlling a work vehicle performing self-driving to travel efficiently, and a control system capable of controlling a work vehicle to travel by self-driving efficiently.

### BRIEF DESCRIPTION OF DRAWINGS

[FIG. 1] FIG. 1 is a diagram providing an overview of an agriculture management system according to an illustrative embodiment of the present disclosure.
[FIG. **2]** FIG. **2** is a side view schematically showing an example of work vehicle and an example of implement that is linked to the work vehicle.
[FIG. **3]** FIG. **3** is a block diagram showing an example configuration of the work vehicle and the implement.
[FIG. **4]** FIG. **4** is a conceptual diagram showing an example of the work vehicle performing positioning based on an RTK-GNSS.
[FIG. **5]** FIG. **5** is a diagram showing an example of operational terminal and an example of operation switches disposed in a cabin.
[FIG. **6]** FIG. **6** is a block diagram showing an example of hardware configuration of a management device and a terminal device.
[FIG. **7]** FIG. **7** is a diagram schematically showing an example of the work vehicle automatically traveling along a target path inside a field.
[FIG. **8]** FIG. **8** is a flowchart showing an example operation of steering control during self-driving.
[FIG. **9A]** FIG. **9A** is a diagram showing an example of the work vehicle traveling along a target path **P.**
[FIG. **9B]** FIG. **9B** is a diagram showing an example of the work vehicle at a position which is shifted rightward from the target path **P.**
[FIG. **9C]** FIG. **9C** is a diagram showing an example of the work vehicle at a position which is shifted leftward from the target path **P.**
[FIG. **9D]** FIG. **9D** is a diagram showing an example of the work vehicle oriented in an inclined direction with respect to the target path **P.**
[FIG. **10]** FIG. **10** is a diagram schematically showing an example of state where a plurality of the work vehicles perform self-traveling inside a field and on a road outside the field.
[FIG. **11]** FIG. **11** is a diagram showing an example of global path and an example of local path generated in an environment where there is an obstacle.
[FIG. **12]** FIG. **12** is a flowchart showing a method for path planning and travel control.
[FIG. **13]** FIG. **13** is a flowchart showing an example of procedure by which the work vehicle executes an obstacle avoidance operation.
[FIG. **14A]** FIG. **14A** is a diagram schematically showing an example of zones where LiDAR sensors included in the work vehicle can sense.
[FIG. **14B]** FIG. **14B** is a diagram schematically showing an example of zones where cameras included in the work vehicle can sense.
[FIG. **15]** FIG. **15** shows an example of table including a first influence degree and a second influence degree for each of object types, the table being stored in a storage device.
[FIG. **16]** FIG. **16** is a flowchart showing an example of procedure by which the work vehicle executes the obstacle avoidance operation.
[FIG. **17A]** FIG. **17A** is a schematic view showing a method for determining whether or not a detected object will contact the work vehicle and the implement.
[FIG. **17B]** FIG. **17B** is a schematic view showing a method for determining whether or not the detected object will contact the work vehicle and the implement.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self -driving may be referred to as a "self -driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle- type machine, travel of the agricultural machine via self-driving will be referred to as "self -traveling". The controller may control at least one of: steering that is required in the movement of the agricultural machine; adjustment of the moving speed; and beginning and ending of a move. In the case of controlling a work vehicle having an implement attached thereto, the controller may control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self -driving may also move partly based on the user's instructions. Moreover, an agricultural machine that performs self-driving may operate not only in a self -driving mode but also in a manual driving mode, where the agricultural machine moves through manual operations of the driver. When performed not manually but through the action of a controller, the steering of an agricultural machine will be referred to as "automatic steering". A part of, or the entirety of, the controller may reside outside the agricultural machine. Control signals, commands, data, etc. may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan may include, for example, information representing the order of the tasks of agricultural work to be performed by an agricultural machine or the field where each of the tasks of agricultural work is to be performed. The work plan may include information representing the time and the date when each of the tasks of agricultural work is to be performed. In particular, the work plan including information representing the time and the date when each of the tasks of agricultural work is to be performed is referred to as a "work schedule" or simply as a "schedule". The work schedule may include information representing the time when each task of agricultural work is to begin and/or end on each of working days. The work plan or the work schedule may include, for example, information representing, for each task of agricultural work, the contents of the task, the implement to be used, and/or the types and amounts of agricultural supplies to be used. As used herein, the term "agricultural supplies" refers to goods used for agricultural work to be performed by an agricultural machine. The agricultural supplies may also be referred to simply as "supplies". The agricultural supplies may include goods consumed by agricultural work such as, for example, agricultural chemicals, fertilizers, seeds, or seedlings. The work plan may be created by a processing unit communicating with the agricultural machine to manage the agricultural machine or a processing unit mounted on the agricultural machine. The processing unit can create a work plan based on, for example, information input by the user (agricultural business executive, agricultural worker, etc.) manipulating a terminal device. In this specification, the processing unit communicating with the agricultural machine to manage the agricultural machine will be referred to as a "management device" . The management device may manage agricultural work of a plurality agricultural machines. In this case, the management device may create a work plan including information on each task of agricultural work to be performed by each of the plurality of agricultural machines. The work plan may be downloaded to each of the agricultural machines and stored in a storage device in each of the agricultural machines. In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding the object existing in the environment, the environment map may include information other than the position (e.g., attribute information or other types of information). The "environment map" encompasses various type of maps such as a point cloud map and a lattice map. Data on a local map or a partial map that is generated or processed in a process of constructing the environment map is also referred to as a "map" or "map data".

An "agricultural road" is a road used mainly for agriculture. The "agricultural road" is not limited to a road paved with asphalt, and encompasses unpaved roads covered with soil, gravel or the like. The "agricultural road" encompasses roads (including private roads) on which only vehicle-type agricultural machines (e.g., work vehicles such as tractors, etc.) are allowed to pass and roads on which general vehicles (automobiles, trucks, buses, etc.) are also allowed to pass. The work vehicles may automatically travel on a general road in addition to an agricultural road. The "general road" is a road maintained for traffic of general vehicles.

A "feature" refers to an object existing on the earth. Examples of features include waterways, grass, trees, roads, fields, ditches, rivers, bridges, forests, mountains, rocks, buildings, railroad tracks, and the like. Borders, names of places, names of buildings, names of fields, names of railroad lines and the like, which do not exist in the real world, are not encompassed in the "feature" according to the present disclosure.

A "GNSS satellite" refers to an artificial satellite in the Global Navigation Satellite System (GNSS). GNSS is the general term for satellite positioning systems such as GPS (Global Positioning System), QZSS (Quasi-Zenith Satellite System), GLONASS, Galileo, and BeiDou. A GNSS satellite is a satellite in such a positioning system. A signal transmitted from a GNSS satellite is referred to as a "satellite signal". A "GNSS receiver" is a device to receive radio waves transmitted from a plurality of satellites in the GNSS and perform positioning based on a signal superposed on the radio waves. "GNSS data" is data output from the GNSS receiver. The GNSS data may be generated in a predetermined format such as, for example, the NMEA-0183 format. The GNSS data may include, for example, information representing a receiving state of the satellite signal received from each of the satellites. The GNSS data may include, for example, the identification number, the angle of elevation, the angle of direction, and a value representing the reception strength of each of the satellites from which the satellite signals are received. The reception strength is a numerical value representing the strength of each received satellite signal. The reception strength may be expressed by a value such as, for example, the carrier to noise density ratio (C/N0). The GNSS data may include positional information on the GNSS receiver or the agricultural machine, the positional information being calculated based on a plurality of received satellite signals. The positional information may be expressed by, for example, the latitude, the longitude and the altitude from the mean sea level. The GNSS data may further include information representing the reliability of the positional information.

The expression "satellite signals are receivable in a normal state" indicates that the satellite signals can be received stably such that the reliability of the positioning is not significantly lowered. A state where satellite signals cannot be received in a normal state may be expressed as a "reception failure of satellite signals" occurring. The "reception failure of satellite signals" is a state where the reliability of the positioning is lowered as compared with the normal receiving state, due to deterioration in the receiving state of the satellite signals. A reception failure may occur in the case where, for example, the number of detected satellites is small (e.g., three or less), the reception strength of each satellite signal is low, or multi-path is occurring. Whether or not a reception failure is occurring may be determined based on, for example, information on the satellites that is included in the GNSS data. It can be determined whether or not a reception failure is occurring based on, for example, the value of the reception strength of each of the satellites included in the GNSS data or the value of DOP (Dilution of Precision) representing the state of positional arrangement of the satellites.

A "global path" is data on a path connecting a departure point to a target point of an automatic movement of the agricultural machine, and is generated by a processing unit performing path planning. Generation of such a global path is referred to as "global path planning". In the following description, the global path will be referred to also as a "target path" or simply as a "path". The global path may be defined by, for example, coordinate values of a plurality of points which the agricultural machine is to pass. Such a point that the agricultural machine is to pass is referred as a "waypoint", and a line segment connecting waypoints adjacent to each other is referred to as a "link".

A "local path" is a path by which the agricultural machine can avoid an obstacle, and is consecutively generated while the agricultural machine is automatically moving along the global path. Generation of such a local path is referred to as "local path planning". The local path is consecutively generated based on data acquired by one or more sensing devices included in the agricultural machine, during a movement of the agricultural machine. The local path may be defined by a plurality of waypoints along a part of the global path. Note that in the case where there is an obstacle in the vicinity of the global path, the waypoints may be set so as to detour around the obstacle. The length of a link between the waypoints on the local path is shorter than the length of a link between the waypoints on the global path. The device generating the local path may be the same as, or different from, the device generating the global path. For example, the management device managing the agricultural work to be performed by the agricultural machine may generate the global path, whereas the controller mounted on the agricultural machine may generate the local path. In this case, a combination of the management device and the controller functions as a "processing unit" performing the path planning. The controller of the agricultural machine may function as a processing unit performing both of global path planning and local path planning.

A "repository" is a site provided for storage of an agricultural machine. The repository may be, for example, a site managed by a user of an agricultural machine or a site run jointly by a plurality of users of agricultural machines. The repository may be, for example, a site saved for storage of an agricultural machine, such as a warehouse, a barn or a parking area at a house or an office of the user (agricultural worker, etc.). The position of the repository may be previously registered and recorded in a storage device.

A "waiting area" is a site provided for an agricultural machine to wait while the agricultural machine does not perform agricultural work. One or more waiting areas may be provided in an environment where an agricultural machine performs self-driving. The above-described repository is an example of the waiting area. The waiting area may be managed or used jointly by a plurality of users. The waiting area may be, for example, a warehouse, a garage, a barn, a parking area, or any other facilities. The waiting area may be a warehouse, a barn, a garage or a parking area at a house or an office of an agricultural worker different from the user of the agricultural machine. A plurality of waiting areas may be scattered in the environment where an agricultural machine moves. In the waiting area, work such as replacement or maintenance of a part or an implement of the agricultural machine, or supplement of supplies, may be performed. In this case, parts, tools or supplies necessary for the work may be provided in the waiting area.

Hereinafter, an embodiment in which a technique according to the present disclosure is applied to a work vehicle, such as a tractor, which is an example of agricultural machine, will be mainly described. The technique according to the present disclosure is also applicable to other types of agricultural machines in addition to the work vehicle such as a tractor.

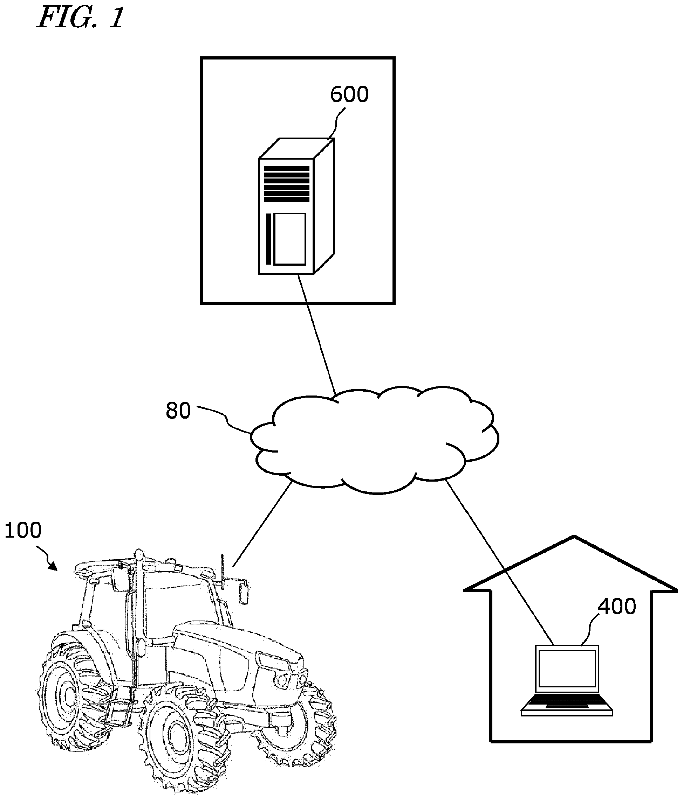

FIG. **1** is a diagram providing an overview of an agriculture management system according to an illustrative embodiment of the present disclosure. The agriculture management system shown in FIG. **1** includes a work vehicle **100,** a terminal device **400,** and a management device **600.** The terminal device **400** is a computer used by a user performing remote monitoring of the work vehicle **100.** The management device **600** is a computer managed by a business operator running the agriculture management system. The work vehicle **100,** the terminal device **400** and the management device **600** can communicate with each other via the network **80.** FIG. **1** shows one work vehicle **100,** but the agriculture management system may include a plurality of the work vehicles or any other agricultural machine.

The work vehicle **100** according to the present embodiment is a tractor. The work vehicle **100** can have an implement attached to its rear and/or its front. While performing agricultural work in accordance with a particular type of implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or a LiDAR sensor. Based on the position of the work vehicle **100** and information, on a target path, generated by the management device **600,** the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g. , an agricultural road or a general road). In the case of performing self -traveling on a road outside the field, the work vehicle **100** travels while generating, along the target path, a local path along which the work vehicle **100** can avoid an obstacle, based on data output from a sensing device such as a camera or a LiDAR sensor. Inside the field, the work vehicle **100** may travel while generating a local path in substantially the same manner as described above, or may perform an operation of traveling along the target path without generating a local path and halting when an obstacle is detected.

The management device **600** is a computer to manage the agricultural work performed by the work vehicle **100.** The management device **600** may be, for example, a server computer that performs centralized management of information regarding the field on the cloud and supports agriculture by use of the data on the cloud. The management device **600,** for example, can create a work plan for the work vehicle **100** and generate a target path for the work vehicle **100** in accordance with the work plan. Alternatively, the management device **600** may generate a target path for the work vehicle **100** in response to a manipulation performed by the user by use of the terminal device **400.** Hereinafter, the target path for the work vehicle **100** generated by the management device **600** (that is, the global path) will be referred to simply as a "path", unless otherwise specified.

The management device **600** generates a target path inside the field and a target path outside the field by different methods from each other. The management device **600** generates a target path inside the field based on information regarding the field. For example, the management device **600** can generate a target path inside the field based on various types of previously registered information such as the outer shape of the field, the area size of the field, the position of the entrance/exit of the field, the width of the work vehicle **100,** the width of the implement, the contents of the work, the types of crops to be grown, the region where the crops are to be grown, the growing states of the crops, and the interval between rows or ridges of the crops. The management device **600** generates a target path inside the field based on, for example, information input by the user by use of the terminal device **400** or any other device. The management device **600** generates a path inside the field such that the path covers, for example, the entirety of a work area where the work is to be performed. Meanwhile, the management device **600** generates a path outside the field in accordance with the work plan or the user's instructions. For example, the management device **600** can generate a target path outside the field based on various types of information such as the order of tasks of agricultural work indicated by the work plan, the position of the field where each task of agricultural work is to be performed, the position of the entrance/exit of the field, the time when each task of agricultural work is to begin and/or end, attribute information of each of roads recorded on the map, the state of the road surface, the state of weather, or the traffic state. The management device **600** may generate a target path based on information representing the path or the waypoints specified by the user manipulating the terminal device **400,** without relying on the work plan.

In addition, the management device **600** may generate or edit an environment map based on data collected by the work vehicle **100** or any other movable body by use of the sensing device such as a LiDAR sensor. The management device **600** transmits data on the work plan, the target path and the environment map thus generated to the work vehicle **100.** The work vehicle **100** automatically moves and performs agricultural work based on the data.

The global path planning and the generation (or editing) of the environment map may be performed by any other device than the management device **600.** For example, the controller of the work vehicle **100** may perform global path planning, or the generation or editing of the environment map.

The terminal device **400** is a computer that is used by a user who is at a remote place from the work vehicle **100.** The terminal device **400** shown in FIG. **1** is a laptop computer, but the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can display, on a display screen thereof, a video captured by one or more cameras (imagers) included in the work vehicle **100.** The user can watch the video to check the state of the surroundings of the work vehicle **100** and instruct the work vehicle **100** to halt or begin traveling. The terminal device **400** can also display, on the display screen thereof, a setting screen allowing the user to input information necessary to create a work plan (e.g., a schedule of each task of agricultural work) for the work vehicle **100.** When the user inputs necessary information to the setting screen and performs a manipulation to transmit the information, the terminal device **400** transmits the input information to the management device **600.** The management device **600** creates a work plan based on the information. The terminal device **400** may be used to register one or more fields where the work vehicle **100** is to perform agricultural work, the repository of the work vehicle **100,** and one or more waiting areas where the work vehicle **100** is to temporarily wait. The terminal device **400** may further have a function of displaying, on a display screen thereof, a setting screen allowing the user to input information necessary to set a target path.

Hereinafter, a configuration and an operation of the system according to the present embodiment will be described in more detail.

### [1. Configuration]

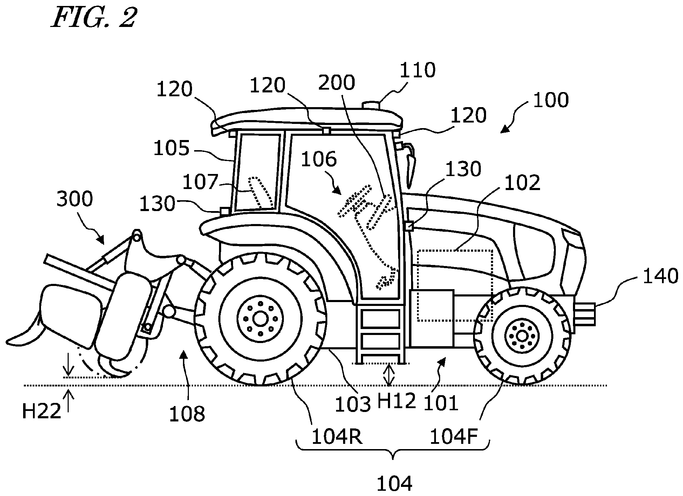

FIG. **2** is a side view schematically showing an example of the work vehicle **100** and an example of implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** can perform self-driving both inside a field and outside the field.

As shown in FIG. **2****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** performs tasked travel inside the field, the front wheels **104F** and/or the rear wheels **104R** may be replaced with a plurality of wheels (crawlers) provided with continuous tracks, instead of being replaced with wheels provided with tires.

The work vehicle **100** includes at least one sensing device sensing the surrounding environment of the work vehicle **100.** In the example shown in FIG. **2****,** the work vehicle **100** includes a plurality of the sensing devices. The sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired by the cameras **120** may be transmitted to the terminal device **400,** which is responsible for remote monitoring. The images may be used to monitor the work vehicle **100** during unmanned driving. The cameras **120** may also be used to generate images to allow the work vehicle **100,** traveling on a road outside the field (an agricultural road or a general road), to recognize objects, obstacles, white lines, road signs, traffic signs or the like in the surroundings of the work vehicle **100.**

The LiDAR sensor **140** in the example shown in FIG. **2** is disposed on a bottom portion of a front surface of the vehicle body **101.** The LiDAR sensor **140** may be disposed at any other position. For example, the LiDAR sensor **140** may be provided on a top portion of the cabin **105.** The LiDAR sensor **140** is a 3D-LiDAR sensor, but alternatively may be a 2D-LiDAR sensor. The LiDAR sensor **140** senses the surrounding environment of the work vehicle **100** and outputs sensing data. While the work vehicle **100** is traveling, the LiDAR sensor **140** repeatedly outputs sensor data representing the distance and the direction between an object existing in the surrounding environment thereof and each of measurement points, or a two-dimensional or three-dimensional coordinate values of each of the measurement points. The sensor data output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **2** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** are used to detect obstacles in the surroundings of the work vehicle **100** during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal (s) received by the antenna. The GNSS unit **110** receives satellite signals transmitted from the plurality of GNSS satellites, and performs positioning based on the satellite signals. GNSS is the general term for satellite positioning systems such as GPS (Global Positioning System), QZSS (Quasi-Zenith Satellite System; e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensing data acquired by the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** or the LiDAR sensor **140** and based on an environment map that is previously stored in the storage device. By correcting or complementing position data based on the satellite signals using the data acquired by the cameras **120** or the LiDAR sensor **140,** it becomes possible to specify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front of the vehicle body **101.** In that case, the implement can be connected to the front of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake implement, a baler, a harvester, a sprayer, or a harrow, can be connected to the work vehicle **100** for use.

The work vehicle **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote operation by a user.

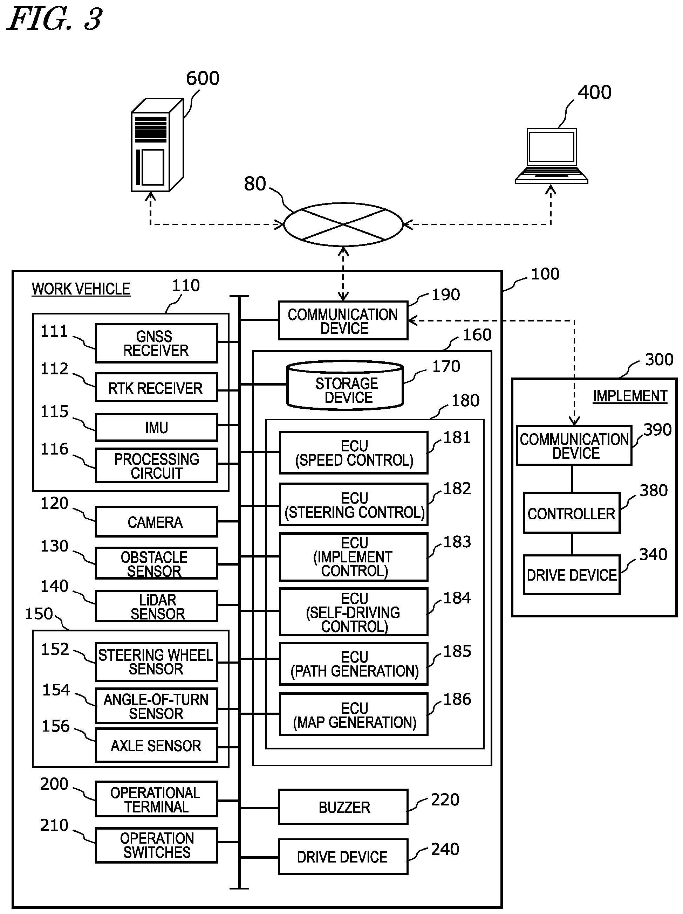

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140** and the operational terminal **200,** the work vehicle **100** in the example of FIG. **3** includes sensors **150** to detect the operating status of the work vehicle **100,** a control system **160,** a communication device **190,** operation switches **210,** a buzzer **220,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The control system **160** includes a storage device **170** and a controller **180.** The controller **180** includes a plurality of electronic control units (ECU) **181** to **186.** The implement **300** includes a drive device **340,** a controller **380,** and a communication device **390.** Note that FIG. **3** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the angle of direction, and a value representing the reception strength of each of the satellites from which the satellite signals are received. The reception strength may be expressed by a value such as, for example, the carrier to noise density ratio (C/N0). The GNSS data may include positional information on the work vehicle **100** calculated based on a plurality of received satellite signals, and information representing the reliability of the positional information. The positional information may be expressed by, for example, the latitude, the longitude and the altitude from the mean sea level. The reliability of the positional information may be represented by, for example, a value of DOP, which represents the state of positional arrangement of the satellites.

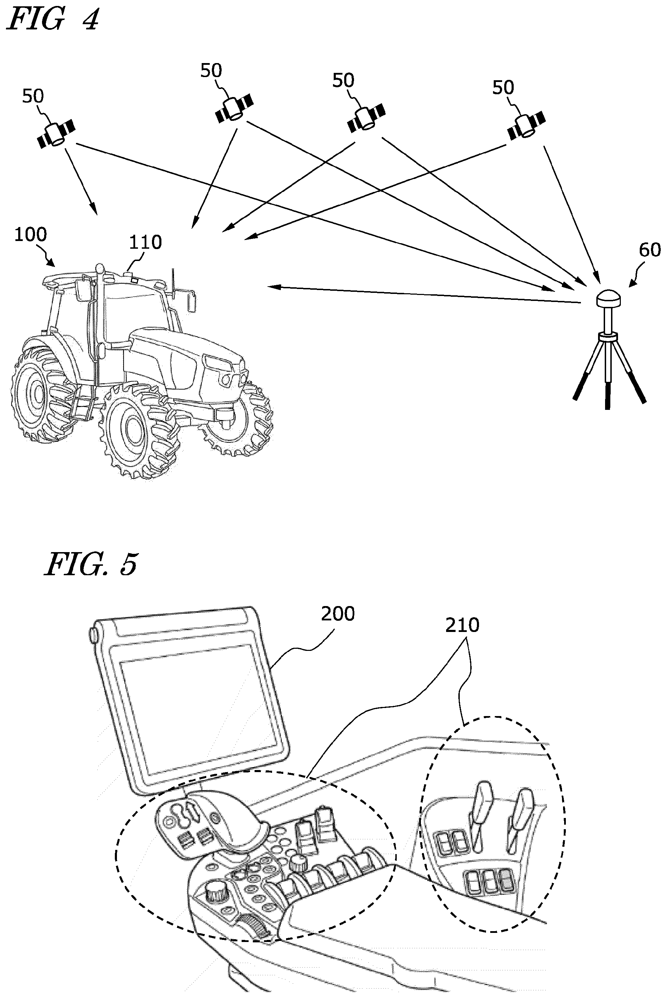

The GNSS unit **110** shown in FIG. **3** performs positioning of the work vehicle **100** by utilizing an RTK (Real Time Kinematic) -GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g. , at a position within 10 km of the work vehicle **100)** . The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by use of the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, approximately one to ten times per second.

Note that the positioning method is not limited to being performed by use of an RTK-GNSS; any arbitrary positioning method (e.g. , an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3 -axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image data (e.g. , motion picture data) . The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning and/or detection of obstacles. As shown in FIG. **2****,** the plurality of cameras **120** may be provided at different positions on the work vehicle **100,** or a single camera **120** may be provided. A visible camera(s) to generate visible light images and an infrared camera (s) to generate infrared images may be separately provided. Both of a visible camera(s) and an infrared camera(s) may be provided as cameras for generating images for monitoring purposes. The infrared camera (s) may also be used for detection of obstacles at nighttime.

The obstacle sensors **130** detect objects existing in the surroundings of the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle **100.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound for alerting the user of an abnormality. For example, the buzzer **220** may present an alarm sound when an obstacle is detected during self-driving. The buzzer **220** is controlled by the controller **180.**

The storage device **170** includes one or more storage mediums such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on a global path (target path) for self-driving. The environment map includes information on a plurality of fields where the work vehicle **100** performs agricultural work and roads around the fields. The environment map and the target path may be generated by a processing device (processor) in the management device **600.** The controller **180** may have a function of generating or editing an environment map and a target path. The controller **180** can edit the environment map and the target path, acquired from the management device **600,** in accordance with the environment where the work vehicle **100** travels. The storage device **170** also stores data on a work plan received by the communication device **190** from the management device **600.**

The work plan includes information on a plurality of tasks of agricultural work to be performed by the work vehicle **100** over a plurality of working days. The work plan may be, for example, data on a work schedule including information on the time when the work vehicle **100** is scheduled to perform each task of agricultural work on each of the working days.

The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, the ECU **185** for path generation, and the ECU **186** for map creation.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communication device **190** to the implement **300.**

Based on data output from the GNSS unit **110,** the cameras **120,** the obstacle sensors **130,** the LiDAR sensor **140** and the sensors **150,** the ECU **184** performs computation and control for achieving self-driving. For example, the ECU **184** specifies the position of the work vehicle **100** based on the data output from at least one of the GNSS unit **110,** the cameras **120** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired by the cameras **120** or the LiDAR sensor **140.** Use of the data acquired by the cameras **120** or the LiDAR sensor **140** allows the accuracy of the positioning to be further improved. Outside the field, the ECU **184** estimates the position of the work vehicle **100** by use of the data output from the LiDAR sensor **140** or the cameras **120.** For example, the ECU **184** may estimate the position of the work vehicle **100** by matching the data output from the LiDAR sensor **140** or the cameras **120** against the environment map. During self-driving, the ECU **184** performs computation necessary for the work vehicle **100** to travel along a target path or a local path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

While the work vehicle **100** is traveling along the target path, the ECU **185** consecutively generates a local path along which the work vehicle **100** can avoid an obstacle. During travel of the work vehicle **100,** the ECU **185** recognizes an obstacle existing in the surroundings of the work vehicle **100** based on the data output from the cameras **120,** the obstacle sensors **130** and the LiDAR sensor **140.** The ECU **185** generates a local path such that the work vehicle **100** avoids the recognized obstacle.

The ECU **185** may have a function of performing global path planning instead of the management device **600.** In this case, the ECU **185** determines a destination of the work vehicle **100** based on the work plan stored in the storage device **170,** and determines a target path from a beginning point to a target point of the movement of the work vehicle **100.** The ECU **185** can create, as the target path, a path by which the work vehicle **100** can arrive at the destination within the shortest time period, based on the environment map stored in the storage device **170** and including information on the roads. Alternatively, the ECU **185** may generate, as the target path, a path including a specific type of road (e.g. , an agricultural road, a road along a specific feature such as a waterway or the like, or a road where satellite signals from GNSS satellites are receivable in a good condition) with priority, based on attribute information on each of the roads included in the environment map.

The ECU **186** generates or edits a map of the environment where the work vehicle **100** travels. In the present embodiment, an environment map generated by an external device such as the management device **600** is transmitted to the work vehicle **100** and recorded in the storage device **170.** Instead, the ECU **186** can generate or edit an environment map. Hereinafter, an operation in a case where the ECU **186** generates an environment map will be described. An environment map may be generated based on sensor data output from the LiDAR sensor **140.** For generating an environment map, the ECU **186** consecutively generates three-dimensional point cloud data based on the sensor data output from the LiDAR sensor **140** while the work vehicle **100** is traveling. The ECU **186** can generate an environment map by connecting the point cloud data consecutively generated by use of an algorithm such as, for example, SLAM. The environment map generated in this manner is a highly accurate three-dimensional map, and may be used for localization performed by the ECU **184.** Based on this three-dimensional map, a two-dimensional map usable for the global path planning may be generated. In this specification, the three-dimensional map that is used for the localization and the two-dimensional map that is used for the global path planning will be both referred to as an "environment map". The ECU **186** can further edit the map by adding, to the map, various types of attribute information on a feature (e.g., a waterway, a river, grass, a tree, etc.), the type of road (e.g., whether it is an agricultural road or not), the state of the road surface, how easily the road is passable, or the like that is recognized based on the data output from the cameras **120** or the LiDAR sensor **140.**

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in compliance with a vehicle bus standard such as, for example, a CAN (Controller Area Network) . Instead of the CAN, faster communication methods such as Automotive Ethernet (registered trademark) may be used. Although the ECUs **181** to **186** are illustrated as individual blocks in FIG. 3, the function of each of the ECU **181** to **186** may be implemented by a plurality of ECUs. Alternatively, an onboard computer that integrates the functions of at least some of the ECUs **181** to **186** may be provided. The controller **180** may include ECUs other than the ECUs **181** to **186,** and any number of ECUs may be provided in accordance with functionality. Each ECU includes a processing circuit including one or more processors.

The communication device **190** is a device including a circuit communicating with the implement **300,** the terminal device **400** and the management device **600.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** with communication devices of the terminal device **400** and the management device **600.** The network **80** may include a 3G, 4G, 5G, or any other cellular mobile communications network and the Internet, for example. The communication device **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform a manipulation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, recording or editing an environment map, setting a target path, and switching ON/OFF the implement **300.** At least a part of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

FIG. **5** is a diagram showing an example of the operational terminal **200** and an example of the operation switches **210** both provided in the cabin **105.** In the cabin **105,** the operation switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. **3** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** can be transmitted from the communication device **390** to the work vehicle **100.**

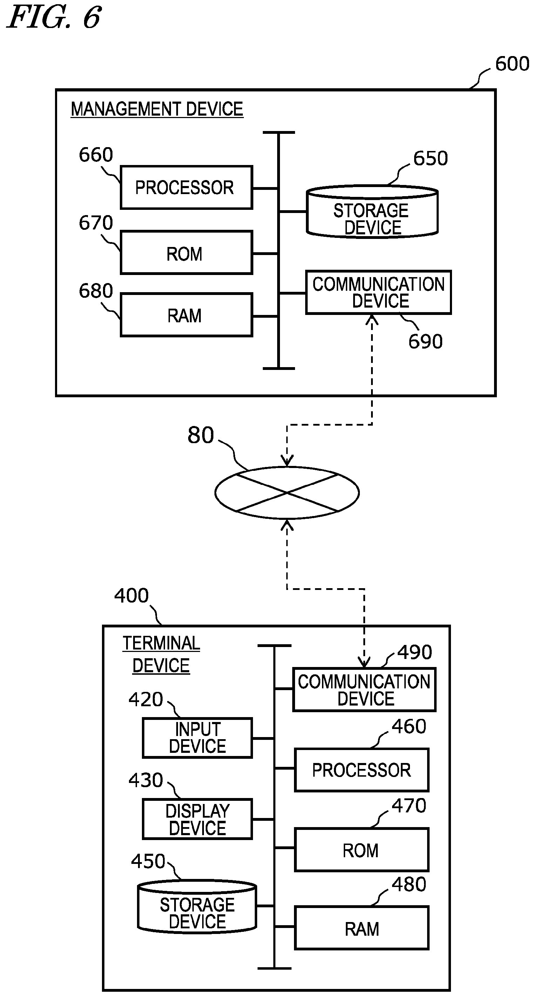

Now, a configuration of the management device **600** and the terminal device **400** will be described with reference to FIG. **6.** FIG. **6** is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communication device **690.** These component elements are communicably connected to each other via a bus. The management device **600** may function as a cloud server to manage the schedule of the agricultural work to be performed by the work vehicle **100** in a field and support agriculture by use of the data managed by the management device **600** itself. The user can input information necessary to create a work plan by use of the terminal device **400** and upload the information to the management device **600** via the network **80.** The management device **600** can create a schedule of agricultural work, that is, a work plan based on the information. The management device **600** can further generate or edit an environment map. The environment map may be distributed from a computer external to the management device **600.**

The communication device **690** is a communication module to communicate with the work vehicle **100** and the terminal device **400** via the network **80.** The communication device **690** can perform wired communication in compliance with communication standards such as, for example, IEEE1394 (registered trademark) or Ethernet (registered trademark). The communication device **690** may perform wireless communication in compliance with Bluetooth (registered trademark) or Wi-Fi, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit) or an ASSP (Application Specific Standard Product) each including a CPU, or a combination of two or more selected from these circuits. The processor **660** consecutively executes a computer program, describing commands to execute at least one process, stored in the ROM **670** and thus realizes a desired process.

The ROM **670** is, for example, a writable memory (e.g., PROM), a rewritable memory (e.g., flash memory) or a memory which can only be read from but cannot be written to. The ROM **670** stores a program to control operations of the processor **660.** The ROM **670** does not need to be a single storage medium, and may be an assembly of a plurality of storage mediums. Apart of the assembly of the plurality of storage memories may be a detachable memory.

The RAM **680** provides a work area in which the control program stored in the ROM **670** is once developed at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disc drive (HDD) . An example of the semiconductor storage device is a solid state drive (SSD). The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460,** a ROM **470,** a RAM **480,** and a communication device **490.** These component elements are communicably connected to each other via a bus. The input device **420** is a device to convert an instruction from the user into data and input the data to a computer. The input device **420** may be, for example, a keyboard, a mouse or a touch panel. The display device **430** may be, for example, a liquid crystal display or an organic EL display. The processor **460,** the ROM **470,** the RAM **480,** the storage device **450** and the communication device **490** are substantially the same as the corresponding component elements described above regarding the example of the hardware configuration of the management device **600,** and will not be described in repetition.

### [2. Operation]

Now, an operation of the work vehicle **100,** the terminal device **400** and the management device **600** will be described.

### [2-1. Self-traveling operation]

First, an example operation of self-traveling of the work vehicle **100** will be described. The work vehicle **100** according to the present embodiment can automatically travel both inside and outside a field. Inside the field, the work vehicle **100** drives the implement **300** to perform predetermined agricultural work while traveling along a preset target path. When detecting an obstacle by the obstacle sensors **130** thereof while traveling inside the field, the work vehicle **100** may, for example, halt traveling and perform operations of presenting an alarm sound from the buzzer **220,** transmitting an alert signal to the terminal device **400** and the like. Inside the field, the positioning of the work vehicle **100** is performed based mainly on data output from the GNSS unit **110.** Meanwhile, outside the field, the work vehicle **100** automatically travels along a target path set for an agricultural road or a general road outside the field. While traveling outside the field, the work vehicle **100** uses data acquired by the cameras **120** or the LiDAR **140.** When an obstacle is detected outside the field, the work vehicle **100,** for example, avoids the obstacle or halts at the point. Outside the field, the position of the work vehicle **100** may be estimated based on data output from the LiDAR sensor **140** or the cameras **120** in addition to positioning data output from the GNSS unit **110.**

Hereinafter, an example operation of the work vehicle **100** performing self-traveling inside the field will be described.

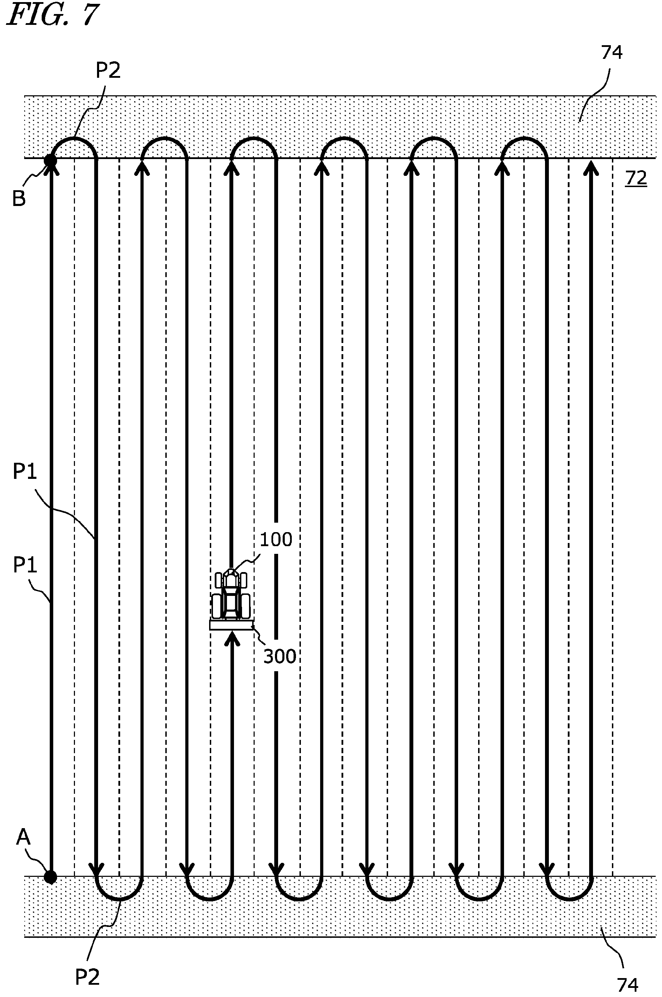

FIG. **7** is a diagram schematically showing an example of the work vehicle **100** automatically traveling along a target path in a field. In this example, the field includes a work area **72,** in which the work vehicle **100** performs work by using the implement **300,** and headlands **74,** which are located near outer edges of the field. The user may previously specify which regions of the field on the map would correspond to the work area **72** and the headlands **74.** The target path in this example includes a plurality of main paths **P1** parallel to each other and a plurality of turning paths **P2** interconnecting the plurality of main paths **P1.** The main paths **P1** are located in the work area **72,** whereas the turning paths **P2** are located in the headlands **74.** Although each of the main paths **P1** in FIG. **7** is illustrated as a linear path, each main path **P1** may also include a curved portion (s). The main paths **P1** may be automatically generated by, for example, the user performing a manipulation of designating two points in the vicinity of ends of the field (points **A** and **B** in FIG. **7****)** while looking at the map of the field displayed on the operational terminal **200** or the terminal device **400.** In this case, the plurality of main paths **P1** are set to be parallel to a line segment connecting the point **A** and the point **B** designated by the user, the main paths **P1** are connected to each other with the turning paths **P2,** and thus the target path inside the field is generated. Broken lines in FIG. **7** depict the working breadth of the implement **300.** The working breadth is previously set and recorded in the storage device **170.** The working breadth may be set and recorded by the user manipulating the operational terminal **200** or the terminal device **400.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self -driving is begun. The target path may be generated so as to cover the entire work area **72** in the field, for example. Along the target path shown in FIG. **7****,** the work vehicle **100** automatically travels while repeating a reciprocating motion from a beginning point of work to an ending point of work. Note that the target path shown in FIG. 7 is merely an example, and the target path may be arbitrarily determined.

Now, an example control by the controller **180** during self-driving inside the field will be described.

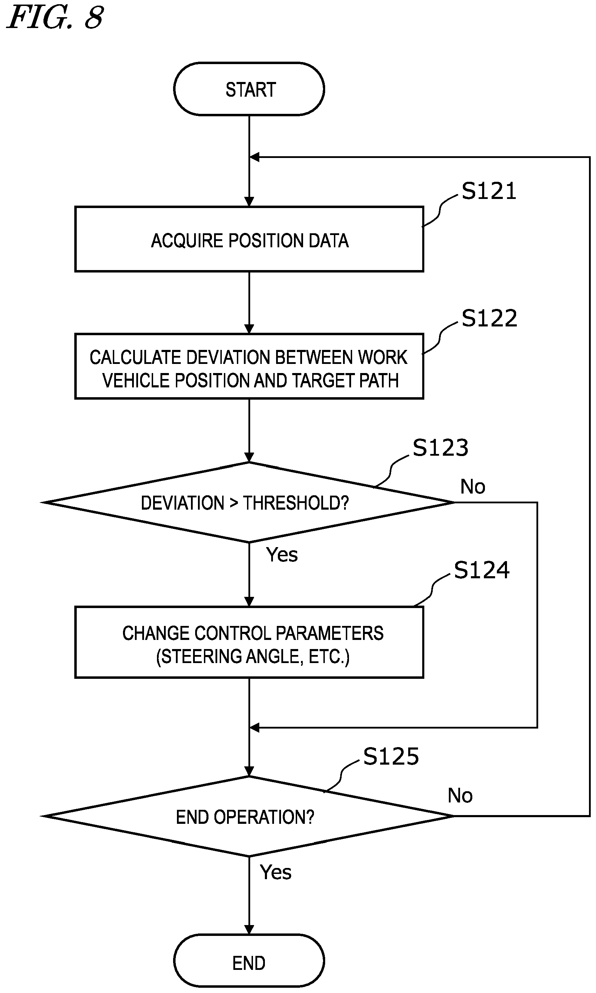

FIG. **8** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle **100** will be maintained at a preset speed, for example. During travel of the work vehicle **100,** the controller **180** acquires data representing the position of the work vehicle **100** that is generated by the GNSS unit **110** (step **S121).** Next, the controller **180** calculates a deviation between the position of the work vehicle **100** and the target path (step **S122).** The deviation represents the distance between the position of the work vehicle **100** and the target path at that moment. The controller **180** determines whether the calculated deviation in position exceeds the preset threshold or not (step **S123).** If the deviation exceeds the threshold, the controller **180** changes a control parameter of the steering device included in the drive device **240** so as to reduce the deviation, thus changing the steering angle. If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote operations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **8****,** the controller **180** controls the drive device **240** based only on the deviation between the position of the work vehicle **100** as specified by the GNSS unit **110** and the target path. Alternatively, a deviation in terms of directions may further be considered in the control. For example, when a directional deviation exceeds a preset threshold, where the directional deviation is an angle difference between the orientation of the work vehicle **100** as specified by the GNSS unit **110** and the direction of the target path, the controller **180** may change the control parameter of the steering device of the drive device **240** (e.g., steering angle) in accordance with the deviation.

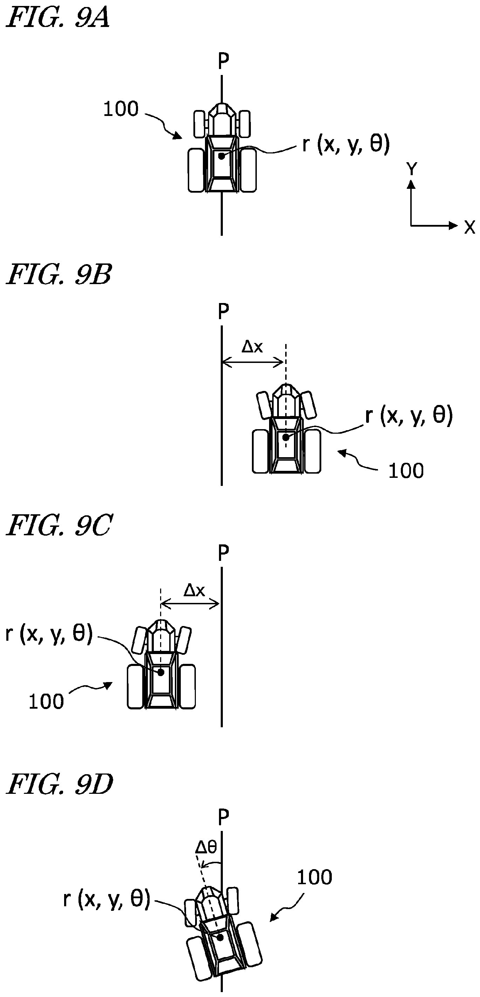

Hereinafter, with reference to FIGS. **9A** to **9D****,** an example of steering control by the controller **180** will be described more specifically.

FIG. **9A** is a diagram showing an example of the work vehicle **100** traveling along a target path **P.** FIG. **9B** is a diagram showing an example of the work vehicle **100** at a position which is shifted rightward from the target path **P.** FIG. **9C** **is** a diagram showing an example of the work vehicle **100** at a position which is shifted leftward from the target path **P.** FIG. **9D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180,** for example, halts the work vehicle **100.** At this point, the controller **180** may cause the buzzer **220** to present an alarm sound or may transmit an alert signal to the terminal device **400.** In the case where the obstacle is avoidable, the controller **180** may locally generate a path along which the obstacle is avoidable and control the drive device **240** such that the work vehicle **100** travels along the path.

The work vehicle **100** according to the present embodiment can perform self-traveling outside a field as well as inside the field. Outside the field, the controller **180** is able to detect an object located at a relatively distant position from the work vehicle **100** (e.g. , another vehicle, a pedestrian, etc.) based on data output from the cameras **120** or the LiDAR sensor **140.** The controller **180** generates a local path such that the local path avoids the detected object, and performs speed control and steering control along the local path. In this manner, self-traveling on a road outside the field can be realized.

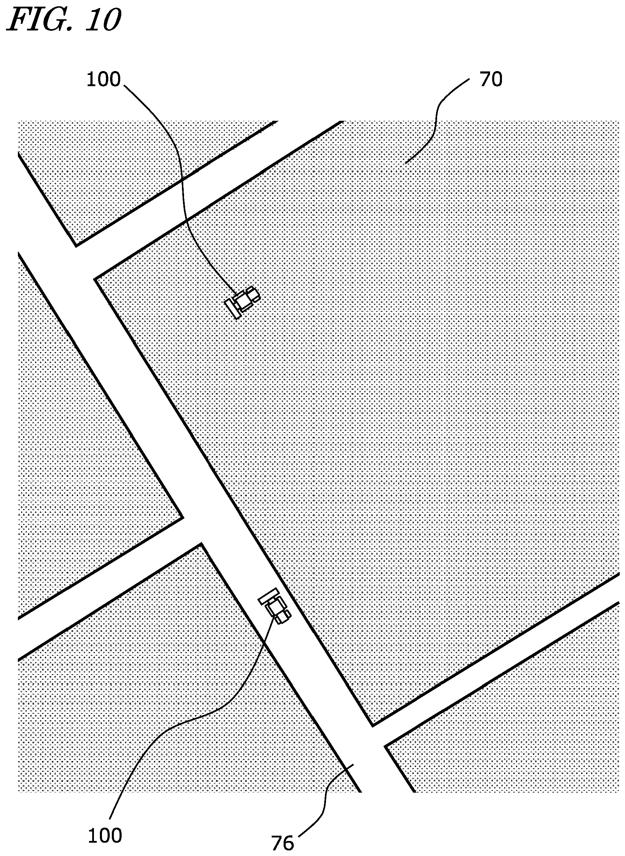

As described above, the work vehicle **100** according to the present embodiment can automatically travel inside the field and outside the field in an unmanned manner. FIG. **10** is a diagram schematically showing an example of state where a plurality of the work vehicles **100** are performing self-traveling inside a field **70** and on a road **76** outside the field **70.** In the storage device **170,** an environment map of a region including a plurality of fields and roads around the fields, and a target path, are recorded. The environment map and the target path may be generated by the management device **600** or the ECU **185.** In the case of traveling on a road, the work vehicle **100** travels along the target path while sensing the surroundings thereof by use of the sensing devices such as the cameras **120** and the LiDAR sensor **140,** with the implement **300** being raised. During travel, the controller **180** consecutively generates a local path and causes the work vehicle **100** to travel along the local path. This allows the work vehicle **100** to perform self-traveling while avoiding obstacles. During travel, the target path may be changed in accordance with the state.

### [2-2. Local path planning]

There may be a case where while the work vehicle **100** is traveling outside the field, there is an obstacle such as a pedestrian or another vehicle on the global path or in the vicinity thereof. In order to avoid the work vehicle **100** colliding against the obstacle, while the work vehicle **100** is traveling, the ECU **185** of the controller **180** consecutively generates a local path along which the work vehicle **100** can avoid the obstacle. While the work vehicle **100** is traveling, the ECU **185** generates a local path based on sensing data acquired by the sensing devices included in the work vehicle **100** (the obstacle sensors **130,** the LiDAR sensor **140,** the cameras **120,** etc.). The local path is defined by a plurality of waypoints along a part of a second path **30B.** Based on the sensing data, the ECU **185** determines whether or not there is an obstacle existing on the road on which the work vehicle **100** is proceeding or in the vicinity thereof. In the case where there is such an obstacle, the ECU **185** sets a plurality of waypoints such that the obstacle is avoided, and thus generates a local path. In the case where there is no such obstacle, the ECU **185** generates a local path substantially parallel to the second path **30B.** Information representing the generated local path is transmitted to the ECU **184** responsible for self-driving control. The ECU **184** controls the ECU **181** and the ECU **182** such that the work vehicle **100** travels along the local path. This allows the work vehicle **100** to travel while avoiding the obstacle. In the case where there is a traffic signal on the road on which the work vehicle **100** is traveling, the work vehicle **100** may recognize the traffic signal based on, for example, an image captured by the cameras **120** and perform an operation of halting at a red light and moving forward at a green light.

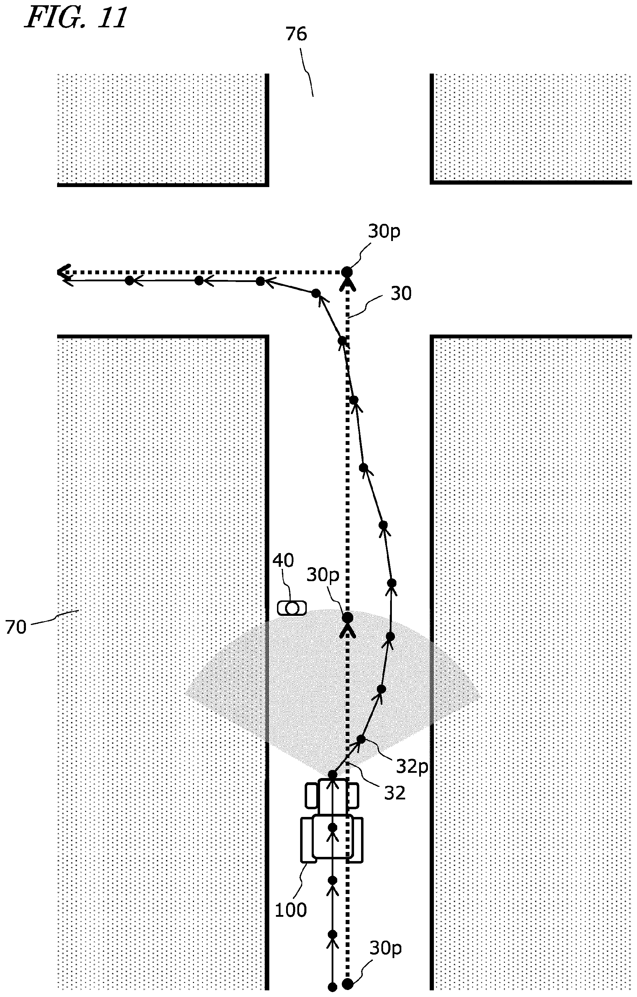

FIG. **11** is a diagram showing an example of global path and an example of local path generated in an environment where there is an obstacle. FIG. **11** represents, as an example, a global path **30** by the broken line arrows, and represents, as an example, local paths **32** consecutively generated during travel of the work vehicle **100** by the solid line arrows. The global path **30** is defined by a plurality of waypoints **30p.** The local paths **32** are defined by a plurality of waypoints **32p** set at a shorter interval than the waypoints **30p.** The waypoints each have information on, for example, the position and the orientation. The management device **600** sets the plurality of waypoints **30p** at a plurality of points including an intersection of the roads **76** to generate the global path **30.** The interval between the waypoints **30p** is relatively long, and may be, for example, about several meters to about several tens of meters. The ECU **185** sets the plurality of waypoints **32p** based on the sensing data output from the sensing devices during travel of the work vehicle **100** to generate the local paths **32.** The interval between the waypoints **32p** of the local paths **32** is shorter than the interval between the waypoints **30p** of the global path **30.** The interval between the waypoints **32p** may be, for example, about several tens of centimeters (cm) to about several meters (m). The local paths **32** are generated in a relatively small range (e.g., a range of about several meters) from the position of the work vehicle **100.** FIG. **11** shows, as an example, a series of local paths **32** generated while the work vehicle **100** travels along the road **76** between the fields **70** and turns left at the intersection. While the work vehicle **100** is moving, the ECU **185** repeats an operation of generating a local path from the position of the work vehicle **100** estimated by the ECU **184** to, for example, a point frontward of the work vehicle **100** by several meters. The work vehicle **100** travels along the local paths consecutively generated.

In the example shown in FIG. **11****,** there is an obstacle **40** (e.g., a human) frontward of the work vehicle **100.** FIG. **11** shows a fan-shaped region as an example of range sensed by the sensing devices such as the cameras **120,** the obstacle sensors **130** or the LiDAR sensor **140** mounted on the work vehicle **100.** In such a state, the ECU **185** generates the local paths **32** such that the obstacle **40** detected based on the sensing data is avoided. The ECU **185** determines whether or not there is a possibility that the work vehicle **100** will collide against the obstacle **40,** based on, for example, the sensing data and the width of the work vehicle **100** (including the width of the implement in the case where the implement is attached). In the case where there is a possibility that the work vehicle **100** will collide against the obstacle **40,** the ECU **185** sets the plurality of waypoints **32p** such that the obstacle **40** is avoided, and generates the local paths **32.** Note that the ECU **185** may recognize the state of the road surface (e.g. , being muddy, having a cave-in, etc.) based on the sensing data, in addition to the presence/absence of the obstacle **40,** and in the case where a site on which it is difficult to travel is detected, may generate the local paths **32** such that such a site is avoided. The work vehicle **100** travels along the local paths **32.** In the case where the obstacle **40** cannot be avoided in whichever manner the local paths **32** may be set, the controller **180** may halt the work vehicle **100.** At this point, the controller **180** may transmit an alert signal to the terminal device **400** to warn a supervisor. In the case where after the work vehicle **100** halts, the obstacle **40** is moved and it is recognized that there is no risk of collision, the controller **180** may restart the travel of the work vehicle **100.**

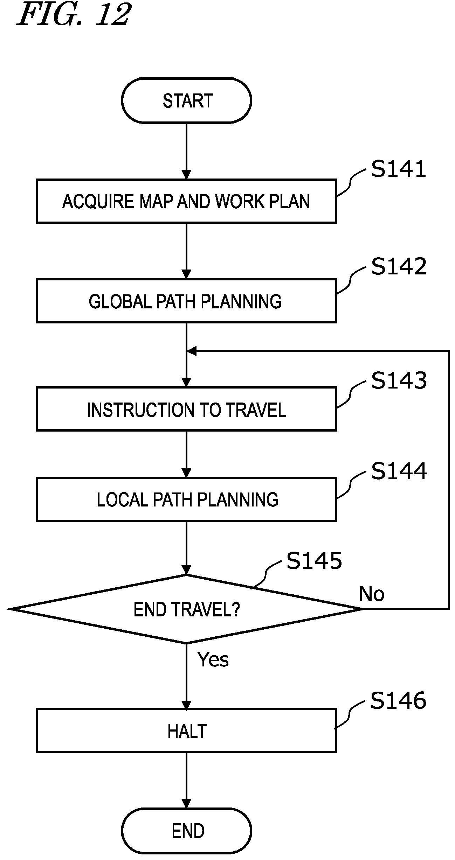

FIG. **12** is a flowchart showing an operation of path planning and travel control according to the present embodiment. Operation in steps **S141** to **S146** shown in FIG. **12** are executed, so that the path planning can be performed and the self-traveling of the work vehicle **100** can be controlled.

In the example shown in FIG. **12****,** the management device 600 first acquires a map and a work plan from the storage device **650** (step **S141)**. Next, the management device **600** performs global path planning for the work vehicle **100** based on the map and the work plan by the above-described method (step **S142).** The global path planning may be performed at any timing before the work vehicle **100** begins to travel. The global path planning may be performed immediately before the work vehicle **100** begins to travel, or the day before the work vehicle **100** begins to travel or even earlier. The global path may be generated based on information input by the user by use of the terminal device **400** (e.g. , based on the departure point, the target point, the waypoints, etc.). As described above, when generating a path toward a field or a path from a field toward another site (e.g., the repository or the waiting area for the work vehicle **100**), the management device **600** generates, as the path for the work vehicle **100,** at least one of a path including an agricultural road with priority, a path including a road along a specific feature with priority, and a path including, with priority, a road where satellite signals are receivable in a normal manner, based on attribute information on each of the roads on the map. The management device **600** transmits the data representing the generated global path to the work vehicle **100.** After this, the management device **600** gives the work vehicle **100** an instruction to travel, at a predetermined timing. Upon receipt of the instruction, the controller **180** of the work vehicle **100** controls the drive device **240** to begin the travel of the work vehicle **100** (step **S143).** This causes the work vehicle **100** to begin traveling. The timing when the work vehicle **100** begins traveling may set to, for example, such an appropriate timing as to allow the work vehicle **100** to arrive at the field before the time when the first task of agricultural work is to begin on each working day indicated by the work plan. During travel of the work vehicle **100,** the ECU **185** of the controller **180** performs local path planning to avoid collision against an obstacle by the method described above (step **S144).** In the case where no obstacle is detected, the ECU **185** generates a local path substantially parallel to the global path. In the case where an obstacle is detected, the ECU **185** generates a local path along which the obstacle is avoidable. Next, the ECU **184** determines whether or not to end the travel of the work vehicle **100** (step **S145).** In the case where, for example, a local path along which the obstacle is avoidable cannot be generated, or in the case where the work vehicle **100** has arrived at the target point, the ECU **184** halts the work vehicle **100** (step **S146).** In the case where no obstacle is detected, or in the case where a local path along which the obstacle is avoidable is generated, the operation returns to step **S143,** and the ECU **184** causes the work vehicle **100** to travel along the generated local path. After this, the operation in steps **S143** to **S145** is repeated until it is determined in step **S145** to end the travel.

The above-described operation allows the work vehicle **100** to automatically travel along the generated path without colliding against any obstacle.

In the example of FIG. **12****,** the global path, once generated, is not changed until the work vehicle **100** arrives at the target point. The global path is not limited to this, and may be modified while the work vehicle **100** is traveling. For example, the ECU **185** may recognize at least one of: the state of the road on which the work vehicle **100** is traveling, the state of the plants in the surroundings of the work vehicle **100,** and the state of weather, based on the sensing data acquired by the sensing devices such as the cameras **120** or the LiDAR sensor **140** while the work vehicle **100** is traveling, and in the case where the recognized state fulfills a predetermined condition, may change the global path. There is a case where while the work vehicle **100** is traveling along the global path, a part of the road along the global path is difficult to pass along. For example, there is a case where the road is muddy due to a heavy rain, the road surface has a cave-in, or it is impossible to pass along the road due to an accident or any other reason. Alternatively, there is a case where a satellite signal from a GNSS satellite is difficult to be received for the reason that the plants around the agricultural road have grown more than expected or that a new building has been built. In consideration of such a situation, the ECU **185** may detect a road that is difficult to pass along, based on the sensing data acquired during travel of the work vehicle **100** and may change the path such that the post-change path avoids such a road. In the case where the path is changed, the ECU **185** may cause the storage device **170** to store the post-change path and may transmit information on the post-change path to the management device **600.** In this case, the next time a path to the same field is to be generated, the management device **600** may adopt the post-change path. This allows the path planning to be performed flexibly in accordance with a change in the environment.

### [2-3. Obstacle detection and travel control]

The method by which the path for the work vehicle **100** is changed such that the work vehicle **100** avoids the detected obstacle is described above with reference to FIG. **11** and FIG. **12****.** Hereinafter, a method by which when detecting an object that is a possible obstacle, the work vehicle **100** determines whether or not to avoid the detected obstacle and thus controls travel thereof by self -driving will be described. The work vehicle **100** according to the present embodiment, when detecting an object while performing the self -driving in a state where the implement **300** is linked thereto, determines whether or not to avoid the detected object based on a degree of influence of the object on the work vehicle **100** and a degree of influence of the object on the implement **300,** and thus can control the travel thereof by self-driving. Herein, the work vehicle **100** is an agricultural machine such as a tractor or the like, and the implement **300** is a machine performing agricultural work.

The work vehicle **100** performing the self-driving according to the present embodiment includes at least one sensor (sensing device) sensing the surrounding environment of the work vehicle **100** and outputting sensor data, the controller **180** controlling the self -driving of the work vehicle **100** based on the sensor data, and the linkage device **108** linking the implement to the work vehicle **100.** While the work vehicle **100** is performing the self-driving in a state where the implement **300** is linked thereto, the controller **180** executes (i) to (iii) described below. (i) The controller **180** detects and classifies an object based on sensor data. (ii) The controller **180** determines a first influence degree indicating the magnitude of influence in the case where the detected and classified object contacts the work vehicle **100** and a second influence degree indicating the magnitude of influence in the case where the detected and classified object contacts the implement **300,** in accordance with a result of classification of the object. (iii) In accordance with at least one of the first influence degree or the second influence degree, the controller **180** executes at least one of an operation of avoiding contact with the object or an operation of continuing the self-driving of the work vehicle **100** without executing the operation of avoiding contact with the object. Execution of at least one of the operation of avoiding contact with the object or the operation of continuing the self-driving of the work vehicle **100** without executing the operation of avoiding contact with the object may be referred to as "execution of an obstacle avoidance operation".

The work vehicle **100** according to the present embodiment may be expressed as follows. The work vehicle **100** executes the obstacle avoidance operation based on the sensor data during self-traveling in the following manner: the work vehicle **100** controls the obstacle avoidance operation based on a result of the classification of the object detected by use of the sensor data and also based on the influence degrees in accordance with the result of the classification of the object, the influence degrees being in the case where the object contacts the work vehicle **100** or the implement **300** (i.e., based on the first influence degree and the second influence degree).

A plurality of the ECUs included in the controller **180** may cooperate with each other to perform a process of executing the obstacle avoidance operation. The controller **180** includes the ECU **181** to **186** described above and may also include another ECU performing a part of, or the entirety of, the process of executing the obstacle avoidance operation.

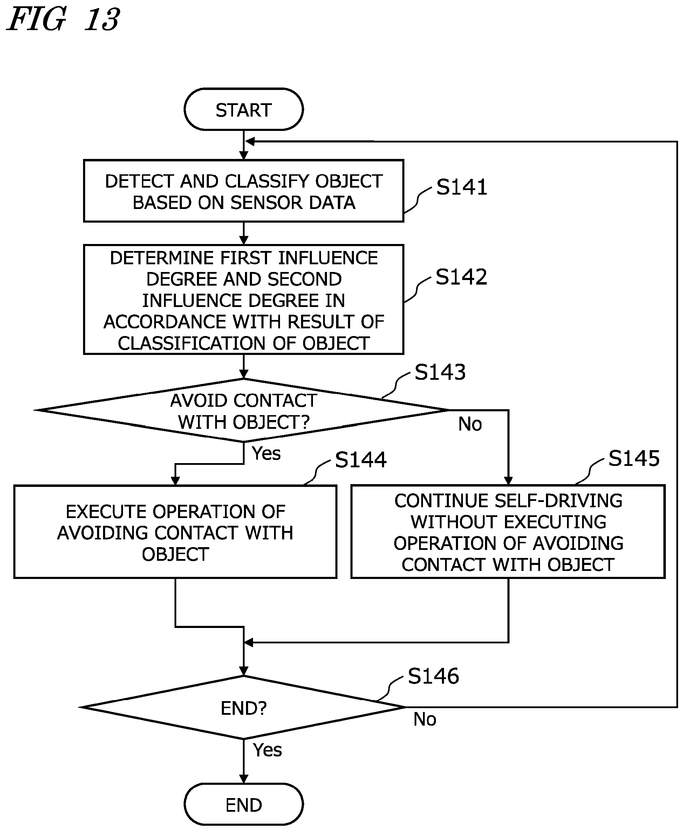

With reference to FIG. **13****,** an example of procedure by which the work vehicle **100** executes the obstacle avoidance operation will be described. FIG. **13** is a flowchart showing an example of procedure by which the work vehicle **100** executes the obstacle avoidance operation, and the procedure is executed while the work vehicle **100** is performing the self-driving with the implement **300** being linked thereto.

In step **S141,** the controller **180** detects and classifies an object based on sensor data.

Herein, sensor data is output from at least one sensor (sensing device) included in the work vehicle **100.** The work vehicle **100** performs the self-driving while sensing the surrounding environment thereof by use of at lest one sensor (sensing device) included in the work vehicle **100.** In the example of FIG. **2****,** for instance, the sensing devices included in the work vehicle **100** include the plurality of cameras **120,** the LiDAR sensor **140,** and the plurality of obstacle sensors **130.** The sensing devices are not limited to these. The work vehicle **100** may include at least one of the cameras **120,** at least one of the obstacle sensors **130** or the LiDAR sensor **140.** The controller **180** detects and classifies an object based on sensor data acquired by at least one of the sensing devices included in the work vehicle **100,** for example, image data acquired by the cameras **120,** data that is output from the obstacle sensors **130** or the LiDAR sensor **140** (e.g. , point cloud data), or the like. The detection of the object may be performed continuously during the time period when the work vehicle **100** is performing the self-driving while sensing the surrounding environment thereof, or may be performed at a predetermined time interval previously set. The detection and the classification of the object may be performed based on sensor data acquired from the same sensing device or sensor data acquired from different sensing devices. The detection and the classification of the object may be performed at the same time; or after an object is detected, the detected object may be classified (that is, the type of the detected object may be identified). The controller **180** classifies the detected object by identifying the type of the object based on, for example, the image data on the object acquired by the cameras **120.** For example, the controller **180** classifies the object by use of a learned model constructed by deep learning of artificial intelligence. The learned model may be constructed as follows: image data on various objects is stored on a computer that executes learning by artificial intelligence, and the learned model is constructed by such a computer. Alternatively, the controller **180** may specify the object by pattern matching, obtain the class of the object from a database that shows such a class, and thus classify the object.

The object detected by the controller **180** based on the sensor data includes an object that is a possible obstacle (that is, an object that obstructs the travel of the work vehicle 100), and includes, for example, a moving object on the earth or a non-moving object that is present in a still state on the earth and also a part of the ground surface in a specific state. Examples of the "part of the ground surface in a specific state" include recesses and protrusions (including hollows, cave-ins, holes, cracks in the road surface, etc.), muddy places, puddles, and the like that obstruct the travel.

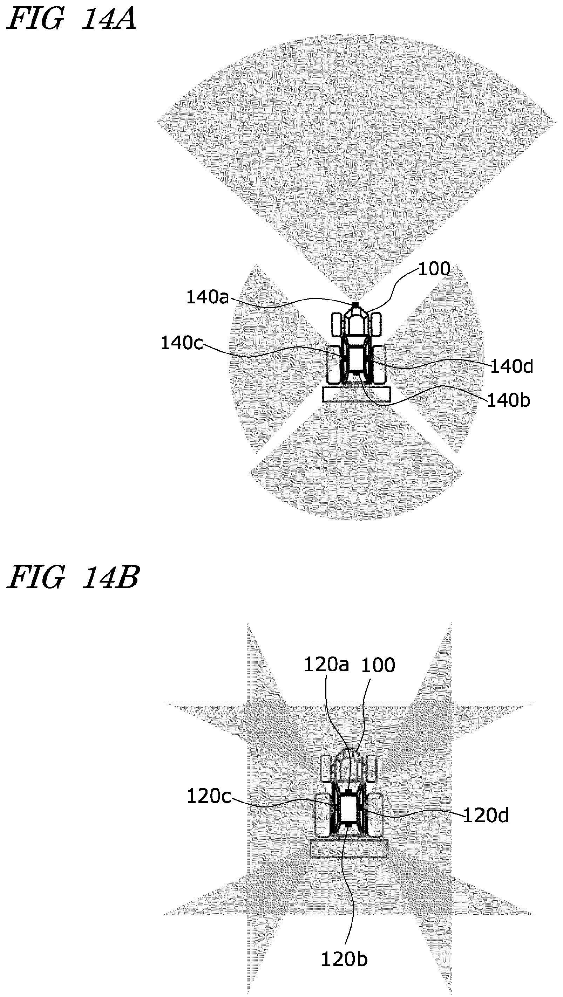

FIG. **14A** and FIG. **14B** are each a diagram schematically showing an example of zones that can be sensed by the LiDAR sensors **140** or the cameras **120** included in the work vehicle **100.** In each of the examples shown in FIG. **14A** and FIG. **14B****,** the work vehicle **100** includes four LiDAR sensors **140 (140a, 140b, 140c** and **140d)** provided at the front, the rear, the left and the right of the work vehicle **100** or four cameras **120 (120a, 120b, 120c** and **120d)** provided at the front, the rear, the left and the right of the work vehicle **100,** and can sense the surrounding environment thereof by these sensing devices. In FIG. **14A** or FIG. **14B****,** an example of zones sensed by the LiDAR sensors **140** or the cameras **120** is represented by gray fan shapes or gray triangles.

The LiDAR sensors **140** each emit laser beam pulses (hereinafter, referred to simply as "laser pulses") one after another while changing the direction of emission, and can measure the distance to the position of each of points of reflection based on the difference between the time of emission and the time when reflected light of each laser pulse is acquired (ToF (Time of Flight) system). Alternatively, the LiDAR sensors **140** may each measure the distance using the FMCW (Frequency Modulated Continuous Wave) technology. A LiDAR sensor using the FMCW technology emits laser light having a frequency thereof modulated linearly, and can find the distance to the point of reflection and the speed, based on the frequency of the beat signal obtained by detection of interference light of the emitted light and the reflected light. The "point of reflection" may be a point on a surface of an object located in the surrounding environment of the work vehicle **100.**

Each of the LiDAR sensors **140** may measure the distance from the LiDAR sensor **140** to the object by an arbitrary method. Measurement methods usable by the LiDAR sensors **140** are of, for example, a machine rotation system, a MEMS system, and a phased array system. These measurement methods are different from each other in the method of emitting the laser pulses (method of scanning). For example, a LiDAR sensor of the machine rotation system rotates a cylindrical head emitting laser pulses and detecting the reflected light of the laser pulses and scans the surrounding environment around a rotation axis thereof at 360 degrees. A LiDAR sensor of the MEMS system swings the direction of emission of laser pulses by use of a MEMS mirror and scans the surrounding environment within a range of a predetermined angle around a swinging axis thereof. A LiDAR sensor of the phased array system swings the direction of emission of light by controlling the optical phase and scans the surrounding environment within a range of a predetermined angle around a swinging axis thereof.

In step **S142,** the controller **180** determines, in accordance with the result of the classification of the object performed in step **S142,** the first influence degree indicating the magnitude of influence on the work vehicle **100** in the case where the detected and classified object contacts the work vehicle **100** and the second influence degree indicating the magnitude of influence on the implement **300** in the case where the detected and classified object contacts the implement **300.**

The first influence degree and the second influence degree may independently be represented by each of a plurality of stages (levels) indicating the magnitude of influence (e.g., three levels of small, medium and large), or by each of continuous numerical values. The controller **180** may calculate a value (score) of the first influence degree and a value (score) of the second influence degree by use of a predetermined evaluation expression (or a predetermined evaluation function). The controller **180** may refer to a table to determine the first influence degree and the second influence degree. For example, a table including a value (or a level) of each of the first influence degree and the second influence degree for each of classes (or levels) of the object may be stored in the storage device **170** of the work vehicle **100,** and the controller **180** may determine the first influence degree and the second influence degree based on the table and the result of the classification of the object.

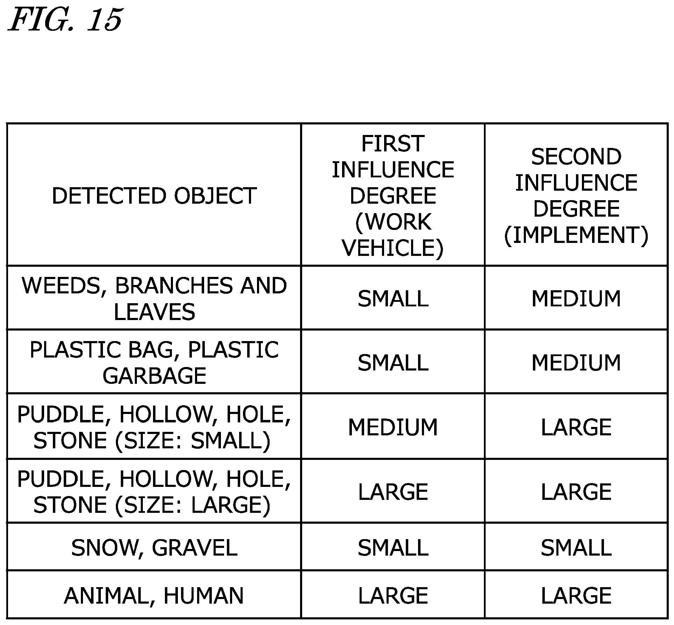

FIG. **15** shows an example of table including the first influence degree and the second influence degree for each of the classes of the object. In the table in FIG. **15****,** the first influence degree and the second influence degree are each represented by the three stages of small, medium and large. The table stored in the storage device **170** may include numerical values corresponding to the three stages of small, medium and large. The controller **180** may determine the first influence degree and the second influence degree based on the size of the object in addition to the table and the result of the classification of the object. For example, in the table shown in FIG. **15****,** different stages of the first influence degree are set for the puddle, the hollow, the hole and the stone in accordance with the sizes thereof. Even the same type of objects may have different magnitudes of influence in accordance with the size or the position thereof when such objects contact the work vehicle 100 or the implement **300.**

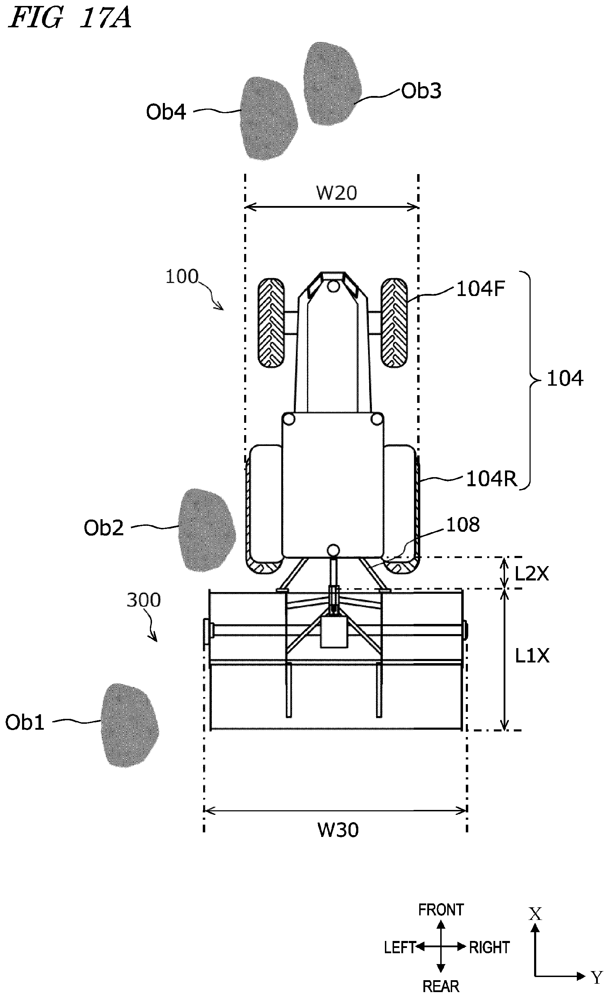

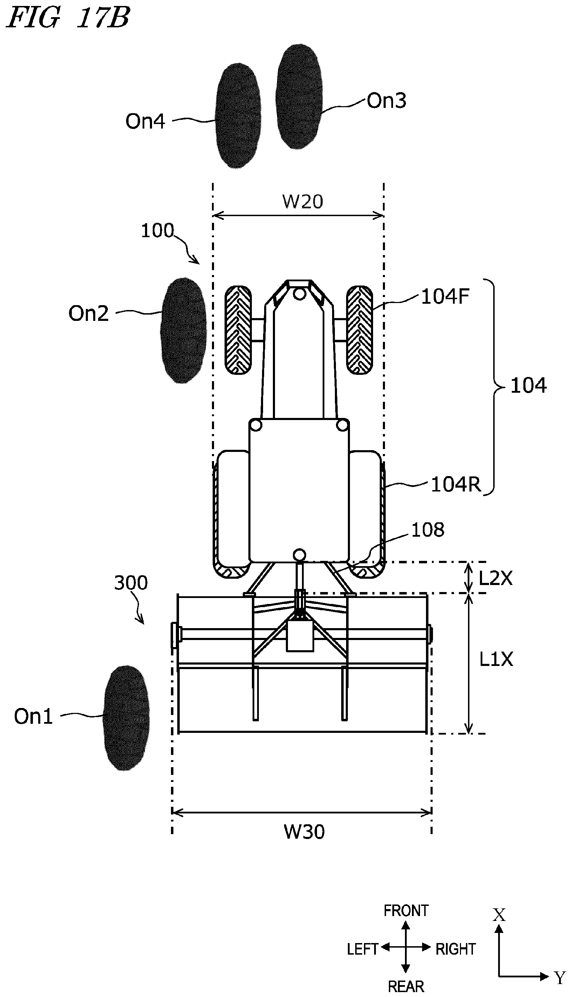

For determining the first influence degree and the second influence degree, the controller **180** may determine whether or not the detected object will contact the work vehicle **100** and whether or not the detected object will contact the implement **300.** A specific method for the determination will be described below with reference to FIG. **17A** and FIG. **17B****.** A specific method for determining whether or not the detected object will contact the work vehicle **100** and whether or not the detected object will contact the implement **300** may be the method described in Patent Document 2. The entirety of the disclosure of Patent Document 2 is incorporated therein by reference.

In step **S143,** the controller **180** determines whether or not to execute the operation of avoiding contact with the object, in accordance with the first influence degree and/or the second influence degree.

The controller **180,** for example, compares each of the first influence degree and the second influence degree against a predefined reference value to determine whether or not to execute the operation of avoiding contact with the object. For example, in the case where the first influence degree is smaller than a first reference value and the second influence degree is smaller than a second reference value, the controller **180** continues the self-driving of the work vehicle **100** without executing the operation of avoiding contact with the object; whereas in the case where the first influence degree is equal to, or larger than, the first reference value or the second influence degree is equal to, or larger than, the second reference value, the controller **180** executes the operation of avoiding contact with the object. That, in the case where the first influence degree is smaller than the first reference value and the second influence degree is smaller than the second reference value, the controller **180** permits the work vehicle **100** to contact the object and causes the work vehicle **100** to continue the self-driving.

For example, in the case where the first influence degree and the second influence degree are each represented by one of three stages of small, medium and large as in the example of the table in FIG. **15****,** it is assumed that the first reference value and the second reference value are each "medium". In the case where both of the first influence degree and the second influence degree are "small", the controller **180** continues the self-driving of the work vehicle **100** without executing the operation of avoiding contact with the object. In the case where either one of the first influence degree and the second influence degree is "medium" or "large", the controller **180** executes the operation of avoiding contact with the object.

The first reference value and the second reference value may be predefined or set by the user. The first reference value and the second reference value may be the same as each other or different from each other. A range of magnitude of influence on the work vehicle **100** that is permitted in the case where the object contacts the work vehicle **100,** and a range of magnitude of influence on the implement **300** that is permitted in the case where the object contacts the implement **300,** may be different from each other.

Based on the determination made in step **S143,** the controller **180** executes the operation of avoiding contact with the object (step **S144),** or executes the operation of continuing the self-driving of the work vehicle **100** without executing the operation of avoiding contact with the object (step **S145).**

In the case where the procedure advances to step **S144,** that is, in the case where the controller **180** executes the operation of avoiding contact with the object, the controller **180** changes the target path for the work vehicle **100** such that the work vehicle **100** avoids contact with the object by, for example, the method described above with reference to FIG. **11** and FIG. **12****.** In the case where the detected object is a moving object (a human being, an animal, another vehicle, etc.), the controller **180** may cause the work vehicle **100** to halt for a predetermined time period and to sense the surrounding environment after an elapse of the predetermined time period. In the case where no object is detected based on the sensor data, the controller **180** may cause the work vehicle **100** to resume traveling. In the case where the object is still detected after the elapse of the predetermined time period, the controller **180** changes the target path for the work vehicle **100** such that the work vehicle **100** avoids the object by, for example, the method described above with reference to FIG. **11** and FIG. **12****.** In the case where the procedure advances to step **S144** (that is, in the case where the controller **180** is to execute the operation of avoiding contact with the object), the controller **180** may cause the work vehicle **100** to halt traveling. When causing the work vehicle **100** to halt traveling, the controller **180** may send a signal to an external device.

In the case where the procedure advances to step **S145,** that is, in the case where the controller **180** executes the operation of continuing the self-driving of the work vehicle **100** without executing the operation of avoiding contact with the object, the controller **180** permits the work vehicle **100** to contact the object and causes the work vehicle **100** to continue the self -driving without changing the target path for the work vehicle **100.** In this case, the controller **180** may change the speed of the work vehicle **100** when necessary (for example, may lower the speed of the work vehicle **100).**

The controller **180** repeats the operation of steps **S141** to **S145** until a command to end the operation is issued (step **S146)** .

The work vehicle **100** executes the obstacle avoidance operation by the above-described procedure.

The work vehicle described in Patent Document 2 is controlled regarding the self-traveling in accordance with the state of the road on which the work vehicle travels (including recesses and protrusions of the road and structures existing on the road) and the state of the implement linked to the work vehicle. In the case where a recess or protrusion of the road or a structure existing on the road is detected, the work vehicle described in Patent Document 2 determines whether or not the work vehicle is capable of traveling without contacting the recess or protrusion of the road or the structure on the road. In the case where it is determined that the work vehicle is not capable of traveling, the work vehicle halts driving.

By contrast, as described above, when an object that is a possible obstacle is detected, the work vehicle **100** according to the present embodiment determines the magnitudes of influence in the case where the object contacts the work vehicle **100** and in the case where the object contacts the implement **300,** as the first influence degree and the second influence degree. In the case where both of the first influence degree and the second influence degree are sufficiently small to be permitted, the work vehicle **100** is permitted to contact the object, and can continue the self-driving without changing the target path thereof. As compared with the work vehicle described in Patent Document 2, the work vehicle **100** can travel by self-driving more efficiently.

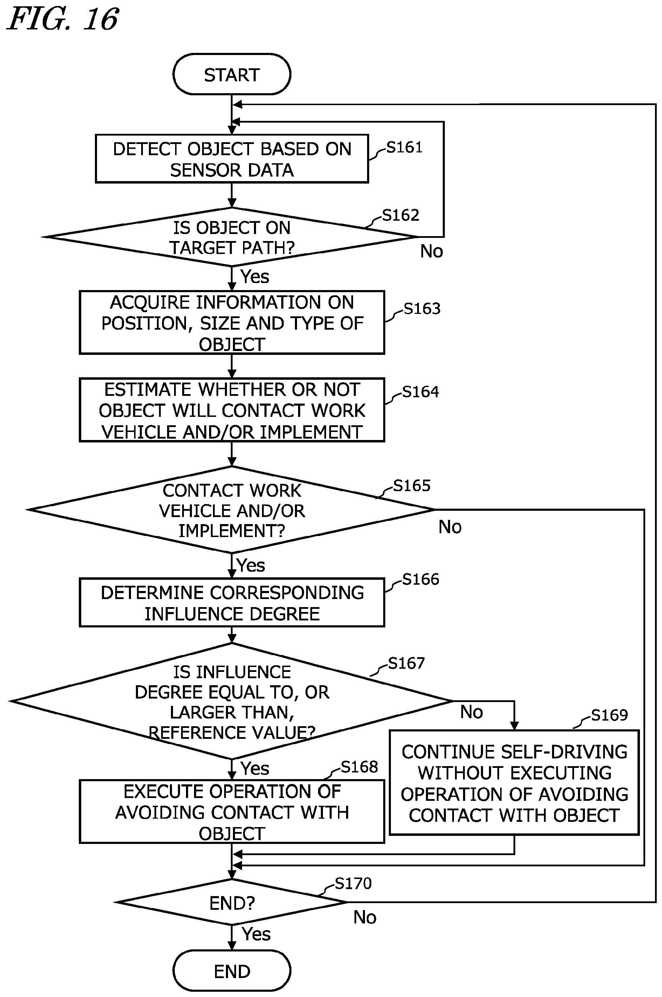

With reference to FIG. **16****,** another example of procedure by which the work vehicle **100** executes the obstacle avoidance operation will be described. FIG. **16** is a flowchart showing another example of procedure by which work vehicle **100** executes the obstacle avoidance operation. Steps common to, or corresponding to, those in the flowchart in FIG. **13** may not be described in detail.

In step **S161,** the controller **180** detects an object existing in the surrounding environment of the work vehicle **100** based on sensor data.

In step **S162,** the controller **180** determines whether or not the object detected in step **S161** is present on, or in the vicinity of, the target path of the work vehicle **100.** In the case where it is determined in step **S162** that the detected object is present on, or in the vicinity of, the target path of the work vehicle **100,** the procedure advances to step **S163.**

In step **S163,** the controller **180** acquires information on the position, the size and the type of the detected object.

In step **S164,** the controller **180** determines (estimates) whether or not the detected object will contact the work vehicle **100** and whether or not the detected object will contact the implement **300.** The controller **180** determines whether or not the detected object will contact the work vehicle **100** and whether or not the detected object will contact the implement **300** based on, for example, the position of the detected object, the size of the work vehicle **100** and the size of the implement **300.** A specific method for the determination will be described below with reference to FIG. **17A** and FIG. **17B****.**

In the case where the controller **180** determines in step **S165** that the detected object will contact at least one of the work vehicle **100** or the implement **300,** the procedure advances to step **S166.**

In step **S166,** the controller **180** determines at least one of the first influence degree or the second influence degree based on the result of the classification of the object.

In the case of, for example, determining in step **S165** that the detected object will contact both of the work vehicle **100** and the implement **300,** the controller **180** determines both of the first influence degree and the second influence degree based on the result of the classification of the object. Alternatively, in the case of determining in step **S165** that the detected object will contact only one of the work vehicle **100** and the implement **300,** the controller **180** determines only one of the first influence degree and the second influence degree that corresponds to the work vehicle **100** or the implement **300** that the object is determined to contact, based on the result of the classification of the object.

In step **S167,** the controller **180** compares the first influence degree and/or the second influence degree determined in step **S166** against a predefined reference value (a first reference value and/or a second reference value) to determine whether or not to execute the operation of avoiding contact with the object.

In the case where, for example, both of the first influence degree and the second influence degree are determined in step **S166,** and in the case where the first influence degree is smaller than the first reference value and the second influence degree is smaller than the second reference value, the controller **180** continues the self-driving of the work vehicle **100** without executing the operation of avoiding contact with the object. In the case where the first influence degree is equal to, or larger than, the first reference value, or in the case where the second influence degree is equal to, or larger than, the second reference value, the controller **180** executes the operation of avoiding contact with the object. Alternatively, in the case where only one of the first influence degree and the second influence degree is determined in step **S166,** and in the case where the determined first influence degree or the determined second influence degree is smaller than the first reference value or the second reference value, the controller **180** continues the self -driving of the work vehicle **100** without executing the operation of avoiding contact with the object. In the case where the determined first influence degree or the determined second influence degree is equal to, or larger than, the first reference value or the second reference value, the controller **180** executes the operation of avoiding contact with the object.

Based on the determination made in step **S167,** the controller **180** executes the operation of avoiding contact with the object (step **S168),** or executes the operation of continuing the self-driving of the work vehicle **100** without executing the operation of avoiding contact with the object (step **S169).**

The controller **180** repeats the operation of steps **S161 to S170** until a command to end the operation is issued (step **S170)** .

The flowcharts described above as examples may be changed when necessary. For example, in the case where the detected object is a moving object (a human being, an animal, etc.) , the controller **180** may estimate the moving speed of the object to determine whether or not the object will contact the work vehicle **100** or the implement **300.**

With reference to FIG. **17A** and FIG. **17B****,** a method by which the controller **180** determines whether or not the detected object will contact the work vehicle **100** and whether or not the detected object will contact the implement **300** will be described. FIG. **17A** and FIG. **17B** are each a plan view schematically showing the work vehicle **100** and the implement **300** linked to the work vehicle **100.**

In the case where the detected object is an object existing on the earth (e.g., a stone, baggage, a crop, etc.), the controller **180** determines whether or not the detected object will contact the work vehicle **100** and whether or not the detected object will contact the implement **300** based on the position of the object (e.g. , the position of the object in a direction of the width of the work vehicle **100** and the implement **300),** a width **W20** of the work vehicle **100** (vehicle body width), and a width **W30** of the implement **300.**

Objects **Ob1** to **Ob4** shown in FIG. **17A** will be described as examples. The controller **180** determines an object, like the object **Ob1,** that is present outside the width **W20** of the work vehicle **100** and the width **W30** of the implement **300** will not contact the work vehicle **100** or the implement **300.** The controller **180** determines that an object, like the object **Ob2,** that is present outside the width **W20** of the work vehicle **100** will not contact the work vehicle **100.** The object **Ob2** is present inside the width **W30** of the implement **300.** In this case, the controller **180** determines whether or not the object **Ob2** will contact the implement **300** further based on a height H22 (see FIG. **2**) of the implement **300** from the ground surface and the height of the object **Ob2.** In the case where the height of the object **Ob2** is sufficiently lower than the height **H22** of the implement **300,** the controller **180** determines that the object **Ob2** will not contact the implement **300.** The objects **Ob3** and **Ob4** are present within the width **W20** of the work vehicle **100** and the width **W30** of the implement **300.** In this case, the controller **180** determines whether or not each of the objects **Ob3** and **Ob4** will contact the wheels **104** (the front wheel **104F** and the rear wheel **104R)** of the work vehicle **100.** The object **Ob3** is at such a position as not to interfere with the wheels **104** and has a height that is sufficiently lower than a height **H12** (FIG. **2****)** of the work vehicle **100** from the ground surface and also sufficiently lower than the height **H22** (FIG. **2****)** of the implement **300** from the ground surface. The controller **180** determines that the object **Ob3** will not contact the work vehicle **100** or the implement **300.** The object **Ob4** is at such a position as to interfere with the wheels **104.** The controller **180** determines that the object **Ob4** will contact the work vehicle **100.**

In the case where the detected object is a recess in the ground surface (e.g., a hole, a puddle, a waterway, etc.), the controller **180** determines whether or not the detected object will contact the work vehicle **100** and whether or not the detected object will contact the implement **300** based on the position of the recess (e.g., the position of the recess in the direction of the width of the work vehicle **100** and the implement **300**) , the width **W20** of the work vehicle **100** (vehicle body width), and the width **W30** of the implement **300.** The controller **180** may determine whether or not the detected object will contact the work vehicle **100** and whether or not the detected object will contact the implement **300** based on the position of the recess and the positions of the wheels **104** of the work vehicle **100.**

Recesses **On1** to **On4** shown in FIG. **17B** will be described as examples. The controller **180** determines the recess **On1,** which is present outside the width **W20** of the work vehicle **100** and the width **W30** of the implement **300,** will not contact the work vehicle **100** or the implement **300.** The controller **180** determines the recess **On2**, which is present outside the width **W20** of the work vehicle **100** but inside the width **W30** of the implement **300,** will not contact the work vehicle **100** or the implement **300.** The recesses **On3** and **On4** are present within the width **W20** of the work vehicle **100** and the width **W30** of the implement **300.** In this case, the controller **180** determines whether or not each of the recesses **On3** and **On4** will contact the wheels **104** (the front wheel **104F** and the rear wheel **104R)** of the work vehicle **100.** The recess **On3** is at such a position as not to interfere with the wheels **104.** The controller **180** determines that the recess **On3** will not contact the work vehicle **100** or the implement **300.** The object **Ob4** is at such a position as to interfere with the wheels **104.** In this case, the controller **180** determines whether or not the recess **On4** will contact the work vehicle **100** or the implement **300** based on the width or the depth of the recess **On4**, the size of the wheels **104,** the height **H22** of the implement **300** from the ground surface, the height **H12** of the work vehicle **100** from the ground surface, and the like. In the case where each of the recesses **On1** to **On4** does not contact the wheels **104** (the front wheel **104F** and the rear wheel **104R)** of the work vehicle **100,** the controller **180** may determine that the each of the recesses **On1** to **On4** will not contact the work vehicle **100.**

For determining whether or not the detected object will contact the work vehicle **100** and whether or not the detected object will contact the implement **300,** the controller **180** may further acquire and use, for example, information on a length **L1X** of the implement **300,** a length **L2X** of the linking device **108** in a front-rear direction, and a length of offset of the implement **300** in a left-right direction. In the example of FIG. **17A** and FIG. **17B****,** the length of offset of the implement **300** in the left-right direction is zero. The offset length of the implement **300** in the left-right direction is not limited to this.

In the example described herein, the controller **180** controls the self-driving of the work vehicle **100** based on the sensor data output from at least one sensing device included in the work vehicle **100.** Note that the work vehicle **100** may perform the self-driving while sensing the surrounding environment thereof by use of at least one sensing device included in another movable body such as, for example, an agricultural machine different from the work vehicle **100,** a drone (Unmanned Arial Vehicle; UAV) or the like. The controller **108** may control the self-driving of the work vehicle **100** by use of sensor data acquired by a sensing device included in another movable body such as, for example, an agricultural machine different from the work vehicle **100,** a drone or the like.

A part of, or the entirety of, the process to be executed by the controller **180** of the work vehicle **100** according to the present embodiment may be executed by another device. Such another device functions as a controller of the control system according to the present embodiment, and may be, for example, any of the management device **600** (processor **660),** the terminal device **400** (processor **460),** and the operational terminal **200.** For example, in the case where a part of the process to be executed by the controller **180** is executed by the processor **660** of the management device **600,** a combination of the controller **180** and the management device **600** functions as the controller of the control system.

A control system according to the present embodiment is a control system for a work vehicle performing self-driving. The control system includes at least one sensor sensing a surrounding environment of the work vehicle **100** and outputting sensor data; and a controller controlling the self-driving of the work vehicle **100** based on the sensor data. When the work vehicle **100** is performing the self-driving in a state where the implement **300** is linked thereto, the controller executes (i) to (iii) described below. (i) The controller detects and classifies an object based on the sensor data. (ii) The controller determines a first influence degree indicating a magnitude of influence in the case where the detected and classified object contacts the work vehicle **100** and a second influence degree indicating a magnitude of influence in the case where the detected and classified object contacts the implement **300,** in accordance with a result of the classification of the object. (iii) The controller executes, in accordance with at least one of the first influence degree or the second influence degree, at least one of an operation of avoiding contact with the object or an operation of continuing the self-driving of the work vehicle **100** without executing the operation of avoiding contact with the object.

A control method according to the present embodiment is a control method for the work vehicle **100** performing self-driving. The control method includes:
(i) detecting and classifying an object based on sensor data output from at least one sensor included in the work vehicle **100,**
(ii) determining a first influence degree indicating a magnitude of influence in the case where the detected and classified object contacts the work vehicle **100** and a second influence degree indicating a magnitude of influence in the case where the detected and classified object contacts the implement **300** linked to the work vehicle **100,** in accordance with a result of the classification of the object, and
(iii) executing, in accordance with at least one of the first influence degree or the second influence degree, at least one of an operation of avoiding contact with the object or an operation of continuing the self-driving of the work vehicle **100** without executing the operation of avoiding contact with the object.

### INDUSTRIAL APPLICABILITY

The techniques according to the present disclosure are applicable to a work vehicle such as, for example, a tractor, a harvester, a rice transplanter, a vehicle for crop management, a vegetable transplanter, a mower, a seeder, a spreader, or an agricultural robot; a method for controlling travel of a work vehicle by self-driving; and a control system for a work vehicle performing self-driving.

### REFERENCE SIGNS LIST

**40:** obstacle; **50:** GNSS satellite; **60:** reference station; **70:** field; **72:** work area; **74:** headland; **76:** road; **80:** network; **100:** work vehicle; **101:** vehicle body; **102:** prime mover (engine); **103:** transmission; **104:** wheel; **105:** cabin; **106:** steering device; **107:** driver's seat; **108:** linkage device; **110:** positioning device (GNSS unit); **111:** GNSS receiver; **112:** RTK receiver; **115:** inertial measurement unit (IMU); **116:** processing circuit; **120:** camera; **130:** obstacle sensor; **140:** LiDAR sensor; **150:** sensors; **152:** steering wheel sensor; **154:** angle-of-turn sensor **154; 156:** axle sensor; **160:** control system; **170:** storage device **170; 180:** controller; **181-186:** ECU; **190:** communication device; **200:** operational terminal; **210:** operation switches; **220:** buzzer; **240:** drive device; **300:** implement; **340:** drive device; **380:** controller; **390:** communication device; **400:** terminal device; **420:** input device; **430:** display device; **450:** storage device; **460:** processor; **470:** ROM; **480:** RAM; **490:** communication device; **600:** management device; **650:** storage device; **660:** processor (processing device); **670:** ROM; **680:** RAM; **690:** communication device

## Claims

1. A work vehicle (100) performing self-driving, the work vehicle (100) comprising:
at least one sensor configured to sense a surrounding environment of the work vehicle (100) and to output sensor data;
a controller (180) configured to control the self-driving of the work vehicle (100) based on the sensor data; and
a linking device (108) configured to link an implement to the work vehicle (100),
wherein the controller (180) is configured to detect and classify an object based on the sensor data when performing the self-driving of the work vehicle (100) in a state where the implement is linked to the work vehicle (100),
**characterized in that** the controller is configured to:
determine a first influence degree indicating a magnitude of influence when the object contacts the work vehicle (100) and a second influence degree indicating a magnitude of influence when the object contacts the implement, in accordance with a result of the classification of the object, and
execute, in accordance with at least one of the first influence degree or the second influence degree, at least one of an operation of avoiding contact with the object or an operation of continuing the self-driving without executing the operation of avoiding.

2. The work vehicle (100) of claim 1, wherein the controller (180) is configured to:
continue the self-driving of the work vehicle (100) without executing the operation of avoiding when the first influence degree is smaller than a first reference value and the second influence degree is smaller than a second reference value, and
execute the operation of avoiding contact with the object when the first influence degree is equal to, or larger than, the first reference value or the second influence degree is equal to, or larger than, the second reference value.

3. The work vehicle (100) of claim 1 or 2, wherein the controller (180) is configured to:
determine whether or not the object will contact the work vehicle (100) and whether or not the object will contact the implement, based on a position of the detected object, a size of the work vehicle (100), and a size of the implement, and
when determining that the object will contact at least one of the work vehicle (100) or the implement, execute at least one of the operation of avoiding contact with the object or the operation of continuing the self-driving without executing the operation of avoiding, based on at least one of the first influence degree or the second influence degree.

4. The work vehicle (100) of claim 3, wherein the controller (180) is configured to, when determining that the object will contact at least one of the work vehicle (180) or the implement, determine at least one of the first influence degree or the second influence degree based on the result of the classification of the object.

5. The work vehicle of claim 4, wherein the controller (180) is configured to, when determining that the object will contact both of the work vehicle (100) and the implement, determine both of the first influence degree and the second influence degree based on the result of the classification of the object.

6. The work vehicle (100) of claim 4, wherein the controller (180) is configured to, when determining that the object will contact either one of the work vehicle (100) and the implement, determine either one of the first influence degree and the second influence degree corresponding to the work vehicle (100) or the implement that the object is determined to contact, based on the result of the classification of the object.

7. The work vehicle (100) of any one of claims 1 through 6, further comprising a storage device (170) storing a table including a value of each of the first influence degree and the second influence degree for each of classes of the object,
wherein the controller (180) is configured to determine the first influence degree and the second influence degree based on the table and the result of the classification of the object.

8. The work vehicle (100) of any one of claims 1 through 7, wherein:
the work vehicle (100) is an agricultural machine, and
the implement is a machine performing agricultural work.

9. A control method for a work vehicle (100) performing self-driving, the control method comprising:
detecting and classifying an object based on sensor data output from at least one sensor included in the work vehicle (100) , the method being **characterized by** comprising:
determining a first influence degree indicating a magnitude of influence when the object contacts the work vehicle (100) and a second influence degree indicating a magnitude of influence when the object contacts the implement linked to the work vehicle (100), in accordance with a result of the classification of the object, and
executing, in accordance with at least one of the first influence degree or the second influence degree, at least one of an operation of avoiding contact with the object or an operation of continuing the self-driving without executing the operation of avoiding.

10. A control system (160) for a work vehicle (100) performing self-driving, the control system (160) comprising:
at least one sensor configured to sense a surrounding environment of the work vehicle and to output sensor data; and
a controller (180) configured to control the self-driving of the work vehicle (100) based on the sensor data;
wherein the controller (180) is configured to detect and classify an object based on the sensor data when the work vehicle (100) is performing the self-driving in a state where the implement is linked thereto,
**characterized in that** the controller is configured to:
determine a first influence degree indicating a magnitude of influence when the object contacts the work vehicle (100) and a second influence degree indicating a magnitude of influence when the object contacts the implement, in accordance with a result of the classification of the object, and
execute, in accordance with at least one of the first influence degree or the second influence degree, at least one of an operation of avoiding contact with the object or an operation of continuing the self-driving without executing the operation of avoiding.

## Patentansprüche

1. Arbeitsfahrzeug (100), das Selbstfahren durchführt, das Arbeitsfahrzeug (100) umfassend:
mindestens einen Sensor, der konfiguriert ist, um eine Umgebung des Arbeitsfahrzeugs (100) zu erfassen und um Sensordaten auszugeben;
einen Steuerung (180), der konfiguriert ist, um das Selbstfahren des Arbeitsfahrzeugs (100) basierend auf den Sensordaten zu steuern; und
eine Anbindungsvorrichtung (108), die konfiguriert ist, um ein Anbaugerät mit dem Arbeitsfahrzeug (100) zu verbinden,
wobei die Steuerung (180) konfiguriert ist, um beim Ausführen des Selbstfahrens des Arbeitsfahrzeugs (100) in einem Zustand, in dem das Anbaugerät mit dem Arbeitsfahrzeug (100) verbunden ist, ein Objekt basierend auf den Sensordaten zu erfassen und zu klassifizieren,
**dadurch gekennzeichnet, dass** die Steuerung zu Folgendem konfiguriert ist:
Bestimmen eines ersten Einflussgrads, der eine Einflussgröße angibt, wenn ein Objekt mit dem Arbeitsfahrzeug (100) in Kontakt kommt, und eines zweiten Einflussgrads, der eine Einflussgröße angibt, wenn das Objekt mit dem Anbaugerät in Kontakt kommt, gemäß einem Resultat der Klassifizierung des Objekts, und
Ausführen, gemäß mindestens einem von dem ersten und dem zweiten Einflussgrad, mindestens eines von einem Vorgang zum Vermeiden eines Kontakts mit dem Objekt oder einen Vorgang zum Fortsetzen des Selbstfahrens ohne Ausführen des Vermeidungsvorgangs.

2. Arbeitsfahrzeug (100) nach Anspruch 1, wobei die Steuerung (180) zu Folgendem konfiguriert ist:
Fortsetzen des Selbstfahrens des Arbeitsfahrzeugs (100) ohne Ausführen des Vermeidungsvorgangs, wenn der erste Einflussgrad kleiner ist als ein erster Referenzwert und der zweite Einflussgrad kleiner ist als ein zweiter Referenzwert, und
Ausführen des Vermeidungsvorgangs eines Kontakts mit dem Objekt, wenn der erste Einflussgrad gleich wie oder größer als der erste Referenzwert ist oder der zweite Einflussgrad gleich wie oder größer als der zweite Referenzwert ist.

3. Arbeitsfahrzeug (100) nach Anspruch 1 oder 2, wobei die Steuerung (180) zu Folgendem konfiguriert ist:
Bestimmen, ob das Objekt mit dem Arbeitsfahrzeug (100) in Kontakt kommen wird und ob das Objekt mit dem Anbaugerät in Kontakt kommen wird, basierend auf einer Position des erfassten Objekts, einer Größe des Arbeitsfahrzeugs (100) und einer Größe des Anbaugeräts, und
wenn bestimmt wird, dass das Objekt mit mindestens einem von dem Arbeitsfahrzeug (100) oder dem Anbaugerät in Kontakt kommen wird, Ausführen mindestens eines von dem Vermeidungsvorgangs eines Kontakts mit dem Objekt oder von dem Vorgang zum Fortsetzen des Selbstfahrens ohne Ausführen des Vermeidungsvorgangs, basierend auf mindestens einem von dem ersten Einflussgrad oder dem zweiten Einflussgrad.

4. Arbeitsfahrzeug (100) nach Anspruch 3, wobei die Steuerung (180) konfiguriert ist, um, wenn bestimmt wird, dass das Objekt mit mindestens einem von dem Arbeitsfahrzeug (180) oder dem Anbaugerät in Kontakt kommen wird, mindestens einen von dem ersten Einflussgrad oder dem zweiten Einflussgrad basierend auf dem Resultat der Klassifizierung des Objekts zu bestimmen.

5. Arbeitsfahrzeug nach Anspruch 4, wobei die Steuerung (180) konfiguriert ist, um, wenn bestimmt wird, dass das Objekt sowohl mit dem Arbeitsfahrzeug (100) als auch mit dem Anbaugerät in Kontakt kommen wird, sowohl den ersten Einflussgrad als auch den zweiten Einflussgrad basierend auf dem Resultat der Klassifizierung des Objekts zu bestimmen.

6. Arbeitsfahrzeug (100) nach Anspruch 4, wobei die Steuerung (180) konfiguriert ist, um, wenn bestimmt wird, dass das Objekt entweder mit dem Arbeitsfahrzeug (100) oder mit dem Anbaugerät in Kontakt kommen wird, entweder den ersten Einflussgrad oder den zweiten Einflussgrad, der dem Arbeitsfahrzeug (100) oder dem Anbaugerät entspricht, mit dem das Objekt voraussichtlich in Kontakt kommt, basierend auf dem Resultat der Klassifizierung des Objekts zu bestimmen.

7. Arbeitsfahrzeug (100) nach einem der Ansprüche 1 bis 6, ferner umfassend eine Speichervorrichtung (170), die eine Tabelle speichert, die für jede Klasse des Objekts einen Wert jedes von dem ersten Einflussgrad und dem zweiten Einflussgrad beinhaltet,
wobei die Steuerung (180) konfiguriert ist, um den ersten Einflussgrad und den zweiten Einflussgrad basierend auf der Tabelle und dem Resultat der Klassifizierung des Objekts zu bestimmen.

8. Arbeitsfahrzeug (100) nach einem der Ansprüche 1 bis 7, wobei:
das Arbeitsfahrzeug (100) eine landwirtschaftliche Maschine ist, und
das Anbaugerät eine Maschine ist, die landwirtschaftliche Arbeiten ausführt.

9. Steuerverfahren für ein Arbeitsfahrzeug (100), das Selbstfahren durchführt, das Steuerverfahren umfassend:
Erfassen und Klassifizieren eines Objekts basierend auf Sensordaten, die von mindestens einem im Arbeitsfahrzeug (100) enthaltenen Sensor ausgegeben werden, wobei das Verfahren **dadurch gekennzeichnet ist, dass** es Folgendes umfasst:
Bestimmen eines ersten Einflussgrads, der eine Einflussgröße angibt, wenn das Objekt mit dem Arbeitsfahrzeug (100) in Kontakt kommt, und eines zweiten Einflussgrads, der eine Einflussgröße angibt, wenn das Objekt mit dem mit dem Arbeitsfahrzeug (100) verbundenen Anbaugerät in Kontakt kommt, gemäß einem Resultat der Klassifizierung des Objekts, und
Ausführen, gemäß mindestens einem von dem ersten Einflussgrad und dem zweiten Einflussgrad, mindestens eines von einem Vermeidungsvorgang eines Kontakts mit dem Objekt oder eines Vorgangs zum Fortsetzen des Selbstfahrens ohne Ausführen des Vermeidungsvorgangs.

10. Steuersystem (160) für ein Arbeitsfahrzeug (100), das Selbstfahren durchführt, das Steuersystem (160) umfassend:
mindestens einen Sensor, der dazu konfiguriert ist, eine Umgebung des Arbeitsfahrzeugs zu erfassen und Sensordaten auszugeben; und
einen Steuerung (180), die konfiguriert ist, um das selbstfahrende Arbeitsfahrzeug (100) basierend auf den Sensordaten zu steuern;
wobei die Steuerung (180) konfiguriert ist, um ein Objekt basierend auf den Sensordaten zu erfassen und zu klassifizieren, wenn das Arbeitsfahrzeug (100) das Selbstfahren in einem Zustand ausführt, in dem das Arbeitsgerät daran gekoppelt ist,
**dadurch gekennzeichnet, dass** die Steuerung zu Folgendem konfiguriert ist:
Bestimmen eines ersten Einflussgrads, der eine Einflussgröße angibt, wenn das Objekt mit dem Arbeitsfahrzeug (100) in Kontakt kommt, und eines zweiten Einflussgrads, der eine Einflussgröße angibt, wenn das Objekt mit dem Anbaugerät in Kontakt kommt, gemäß einem Resultat der Klassifizierung des Objekts, und
Ausführen, gemäß mindestens einem von dem ersten Einflussgrad und dem zweiten Einflussgrad, mindestens eines von einem Vermeidungsvorgang eines Kontakts mit dem Objekt oder eines Vorgangs zum Fortsetzen des Selbstfahrens ohne Ausführen des Vermeidungsvorgangs.

## Revendications

1. Véhicule de travail (100) effectuant une conduite autonome, le véhicule de travail (100) comprenant :
au moins un capteur configuré pour capter un environnement entourant le véhicule de travail (100) et pour délivrer en sortie des données de capteur ;
un contrôleur (180) configuré pour commander la conduite autonome du véhicule de travail (100) sur la base des données de capteur ; et
un dispositif d'attelage (108) configuré pour atteler un outil au véhicule de travail (100),
dans lequel le contrôleur (180) est configuré pour détecter et classer un objet sur la base des données de capteur lors de l'exécution de la conduite autonome du véhicule de travail (100) dans un état où l'outil est attelé au véhicule de travail (100),
**caractérisé en ce que** le contrôleur est configuré pour :
déterminer un premier degré d'influence indiquant une ampleur d'influence lorsque l'objet entre en contact avec le véhicule de travail (100) et un deuxième degré d'influence indiquant une ampleur d'influence lorsque l'objet entre en contact avec l'outil, conformément à un résultat de la classification de l'objet, et
exécuter, conformément à au moins l'un du premier degré d'influence ou du deuxième degré d'influence, au moins l'une d'une opération d'évitement du contact avec l'objet ou d'une opération de poursuite de la conduite autonome sans exécuter l'opération d'évitement.

2. Véhicule de travail (100) selon la revendication 1, dans lequel le contrôleur (180) est configuré pour :
poursuivre la conduite autonome du véhicule de travail (100) sans exécuter l'opération d'évitement lorsque le premier degré d'influence est inférieur à une première valeur de référence et que le deuxième degré d'influence est inférieur à une deuxième valeur de référence, et
exécuter l'opération d'évitement du contact avec l'objet lorsque le premier degré d'influence est supérieur ou égal à la première valeur de référence ou que le deuxième degré d'influence est supérieur ou égal à la deuxième valeur de référence.

3. Véhicule de travail (100) selon la revendication 1 ou 2, dans lequel le contrôleur (180) est configuré pour :
déterminer si l'objet entrera ou non en contact avec le véhicule de travail (100) et si l'objet entrera ou non en contact avec l'outil, sur la base d'une position de l'objet détecté, d'une taille du véhicule de travail (100) et d'une taille de l'outil, et
lorsqu'il est déterminé que l'objet entrera en contact avec au moins l'un du véhicule de travail (100) ou de l'outil, exécuter au moins l'une de l'opération d'évitement du contact avec l'objet ou de l'opération de poursuite de la conduite autonome sans exécuter l'opération d'évitement, sur la base d'au moins l'un du premier degré d'influence ou du deuxième degré d'influence.

4. Véhicule de travail (100) selon la revendication 3, dans lequel le contrôleur (180) est configuré pour, lorsqu'il est déterminé que l'objet entrera en contact avec au moins l'un du véhicule de travail (180) ou de l'outil, déterminer au moins l'un du premier degré d'influence ou du deuxième degré d'influence sur la base du résultat de la classification de l'objet.

5. Véhicule de travail selon la revendication 4, dans lequel le contrôleur (180) est configuré pour, lorsqu'il est déterminé que l'objet entrera en contact à la fois avec le véhicule de travail (100) et avec l'outil, déterminer à la fois le premier degré d'influence et le deuxième degré d'influence sur la base du résultat de la classification de l'objet.

6. Véhicule de travail (100) selon la revendication 4, dans lequel le contrôleur (180) est configuré pour, lorsqu'il est déterminé que l'objet entrera en contact avec l'un quelconque du véhicule de travail (100) et de l'outil, déterminer l'un quelconque du premier degré d'influence et du deuxième degré d'influence correspondant au véhicule de travail (100) ou à l'outil avec lequel il est déterminé que l'objet entrera en contact, sur la base du résultat de la classification de l'objet.

7. Véhicule de travail (100) selon l'une quelconque des revendications 1 à 6, comprenant en outre un dispositif de stockage (170) stockant une table comprenant une valeur de chacun du premier degré d'influence et du deuxième degré d'influence pour chacune des classes de l'objet,
dans lequel le contrôleur (180) est configuré pour déterminer le premier degré d'influence et le deuxième degré d'influence sur la base de la table et du résultat de la classification de l'objet.

8. Véhicule de travail (100) selon l'une quelconque des revendications 1 à 7, dans lequel :
le véhicule de travail (100) est une machine agricole, et
l'outil est une machine effectuant un travail agricole.

9. Procédé de commande pour un véhicule de travail (100) effectuant une conduite autonome, le procédé de commande comprenant le fait de :
détecter et classer un objet sur la base de données de capteur délivrées en sortie par au moins un capteur inclus dans le véhicule de travail (100), le procédé étant **caractérisé en ce qu'**il comprend le fait de :
déterminer un premier degré d'influence indiquant une ampleur d'influence lorsque l'objet entre en contact avec le véhicule de travail (100) et un deuxième degré d'influence indiquant une ampleur d'influence lorsque l'objet entre en contact avec l'outil attelé au véhicule de travail (100), conformément à un résultat de la classification de l'objet, et
exécuter, conformément à au moins l'un du premier degré d'influence ou du deuxième degré d'influence, au moins l'une d'une opération d'évitement du contact avec l'objet ou d'une opération de poursuite de la conduite autonome sans exécuter l'opération d'évitement.

10. Système de commande (160) pour un véhicule de travail (100) effectuant une conduite autonome, le système de commande (160) comprenant :
au moins un capteur configuré pour capter un environnement entourant le véhicule de travail et pour délivrer en sortie des données de capteur ; et
un contrôleur (180) configuré pour commander la conduite autonome du véhicule de travail (100) sur la base des données de capteur ;
dans lequel le contrôleur (180) est configuré pour détecter et classer un objet sur la base des données de capteur lorsque le véhicule de travail (100) effectue la conduite autonome dans un état où l'outil est attelé à celui-ci, **caractérisé en ce que** le contrôleur est configuré pour :
déterminer un premier degré d'influence indiquant une ampleur d'influence lorsque l'objet entre en contact avec le véhicule de travail (100) et un deuxième degré d'influence indiquant une ampleur d'influence lorsque l'objet entre en contact avec l'outil, conformément à un résultat de la classification de l'objet, et
exécuter, conformément à au moins l'un du premier degré d'influence ou du deuxième degré d'influence, au moins l'une d'une opération d'évitement de contact avec l'objet ou d'une opération de poursuite de la conduite autonome sans exécuter l'opération d'évitement.
